(19) Europäisches Patentamt
European Patent Office
Office européen des brevets

(11) **EP 4 679 880 A1**

(12) **EUROPEAN PATENT APPLICATION**
published in accordance with Art. 153(4) EPC

(43) Date of publication:
**14.01.2026 Bulletin 2026/03**

(51) International Patent Classification (IPC):
**H04W 16/14** (2009.01)   **H04W 4/44** (2018.01)
**H04W 16/18** (2009.01)   **H04W 24/06** (2009.01)

(21) Application number: **24766952.6**

(52) Cooperative Patent Classification (CPC):
**H04W 4/44; H04W 16/14; H04W 16/18; H04W 24/06**

(22) Date of filing: **27.02.2024**

(86) International application number:
**PCT/JP2024/007018**

(87) International publication number:
**WO 2024/185581 (12.09.2024 Gazette 2024/37)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.03.2023   JP 2023033218**
**26.04.2023   JP 2023072740**

(71) Applicant: **Sony Group Corporation**
**Tokyo 108-0075 (JP)**

(72) Inventors:
• **KATAGIRI Keita**
**Tokyo 108-0075 (JP)**
• **FURUICHI Sho**
**Tokyo 108-0075 (JP)**

(74) Representative: **Witte, Weller & Partner**
**Patentanwälte mbB**
**Postfach 10 54 62**
**70047 Stuttgart (DE)**

(54) **COMMUNICATION CONTROL DEVICE, COMMUNICATION CONTROL METHOD, COMMUNICATION DEVICE, AND COMMUNICATION METHOD**

(57)     Use efficiency of frequencies used by a plurality of movable communication devices is improved.

A communication control device of the present disclosure is a communication control device that controls a plurality of movable communication devices, and includes a control unit that acquires each piece of request information regarding movement of the communication devices, and determines a movement route of each of the communication devices on the basis of the request information so that a cumulative interference power received by each of the communication devices from another of the communication devices becomes equal to or less than an allowable value.

FIG. 1

EP 4 679 880 A1

**Description**

TECHNICAL FIELD

The present disclosure relates to a communication control device, a communication control method, a communication device, and a communication method.

BACKGROUND ART

In recent years, in the United States, the federal communication commission (FCC) has primarily allotted 5030-5091 MHz for control and non-payload communication (CNPC) applications in an unmanned aircraft system (UAS). Having received the frequency allocation for the UAS CNPC, the American Aerospace Industry Association (AIA: AIA: Aerospace Industries Association) has submitted a petition to the FCC regarding rulemaking of the 5030-5091 MHz band (Non Patent Document 1).

In the same petition, the need for dynamic spectrum access (DSA) is proposed, and it is stated that frequency allocation for CNPC should be dynamically implemented to maximize frequency use efficiency. Then, in January 2023, NPRM (Non Patent Document 2) for the AIA's petition was issued from FCC, and a draft of the utilization rule regulation systematization of the 5030-5091 MHz band was presented.

CITATION LIST

PATENT DOCUMENT

Patent Document 1: WO 2019/230671 A1

NON PATENT DOCUMENT

Non Patent Document 1: AIA Petition, "Petition of AIA for Rulemaking to Adopt Service Rules for Unmanned Aircraft Systems Command and Control in the 5030-5091 MHz Band," RM-11798, Feb. 8, 2018.
Non Patent Document 2: FCC NPRM, RM-11798

SUMMARY OF THE INVENTION

PROBLEMS TO BE SOLVED BY THE INVENTION

The present disclosure improves utilization efficiency of frequencies used by a plurality of movable communication devices.

SOLUTIONS TO PROBLEMS

A communication control device of the present disclosure is a communication control device that controls a plurality of movable communication devices, and includes a control unit that acquires each piece of request information regarding movement of the communication devices, and determines a movement route of each of the communication devices on the basis of the request information so that a cumulative interference power received by each of the communication devices from another of the communication devices becomes equal to or less than an allowable value.

BRIEF DESCRIPTION OF DRAWINGS

Fig. 1 is a diagram illustrating a system model according to the present disclosure.
Fig. 2 is a diagram illustrating a configuration of a frequency management system according to the present disclosure.
Fig. 3 is a diagram illustrating a configuration of an operation plan/interference power management system according to the present disclosure.
Fig. 4 is a diagram illustrating an example of an operation start procedure according to the present disclosure.
Fig. 5 is a diagram illustrating an example of complete route information.

Fig. 6 is a diagram illustrating an example of departure and arrival point information.

Fig. 7 is a diagram illustrating an operation example when the frequency management system receives an operation plan approval request.

Fig. 8 is a diagram illustrating an example in which an operation plan approval request ID is associated with a flying communication device user identifier and recorded in a recording unit.

Fig. 9 is a diagram illustrating an example of an operation subsequent to Fig. 7.

Fig. 10 is a diagram illustrating an operation example of the frequency management system in a case where a part or all of operation plan approval request information is not correctly stored.

Fig. 11 is a diagram illustrating an example in which the frequency management system transmits missing information to a flying communication device user.

Fig. 12 is a diagram illustrating an example of an operation to be performed in a case where the frequency management system determines that a frequency cannot be used in an applied operation plan or an adjusted operation plan cannot be generated.

Fig. 13 is a diagram illustrating an example of updating registration information in the frequency management system.

Fig. 14 is a diagram illustrating an example of processing of the frequency management system regarding interference calculation again.

Fig. 15 is a diagram illustrating another example of processing of the frequency management system regarding interference calculation again.

Fig. 16 is a diagram illustrating an example in which parameter update and recording are performed without performing interference calculation.

Fig. 17 is a diagram illustrating an operation example of canceling registration information in the frequency management system.

Fig. 18 is a diagram illustrating an example of processing performed by the frequency management system in a case where a spatial or temporal vacant frequency can be secured by excluding an operation plan of the communication device.

Fig. 19 is a diagram illustrating a situation in which a plurality of communication devices is flying ahead using the same frequency.

Fig. 20 is a diagram illustrating an example in which an operable route is represented in a grid format.

Fig. 21 is a diagram illustrating two generated operation route candidates.

Fig. 22 illustrates generated five operation route candidates.

Fig. 23 is a flowchart of a process of calculating an operation route candidate of a target communication device in the present disclosure.

Fig. 24 is a diagram illustrating an example in which operation times and operation routes overlap in two adjusted operation plans.

Fig. 25 is a diagram illustrating an example in which cumulative interference power map information and an operation plan of each frequency management system are exchanged via an operation plan/interference power management system.

Fig. 26 is a diagram illustrating an operation plan of a communication device 1 applied by a flying communication device user 1.

Fig. 27 is a diagram illustrating an operation plan of a communication device 2 applied by a flying communication device user 2.

Fig. 28 is a flowchart of an example of an operation of determining an operation route candidate in a case where the route information is departure and arrival point information.

Fig. 29 is a flowchart of an example of an operation in a case where the route information is complete route information.

Fig. 30 is an explanatory diagram of an operation of the frequency management system in a case where permission determination of frequency use is performed for each license area.

Fig. 31 is a flowchart of an example of operations of the operation plan/interference power management system and a communication device user.

Fig. 32 is a diagram illustrating an operation adjustment result of a frequency management system 1 and an operation adjustment result of a frequency management system 2.

Fig. 33 is a block diagram of a schematic configuration of a communication device 300 according to the present disclosure.

## MODE FOR CARRYING OUT THE INVENTION

Hereinafter, embodiments of the present disclosure will be described in detail with reference to the drawings. In one or more embodiments described in the present disclosure, elements included in each of the embodiments can be combined with each other, and the combined resultant also forms part of the embodiments described in the present disclosure.

Problems in the technical background of the present disclosure will be described. In a conventional DSA technology (Patent Document 1), a fixed transmitter environment is assumed, and only radio parameters such as a use frequency and a maximum allowable transmission power of a secondary system are determined in principle of interference avoidance to a primary system. On the other hand, in UAS communication, it is necessary to construct an operation route so that each UAS can arrive at a destination by the shortest route as possible while avoiding interference with each UAS and maximizing frequency use efficiency. In the conventional DSA technology, construction of an operation route of a mobile terminal and simultaneous tuning of radio parameters are not performed, and the technique has been studied this time. The present disclosure provides a frequency management server and a method thereof that simultaneously perform frequency allocation for UAS CNCP and UAS operation route construction.

<1 System model>

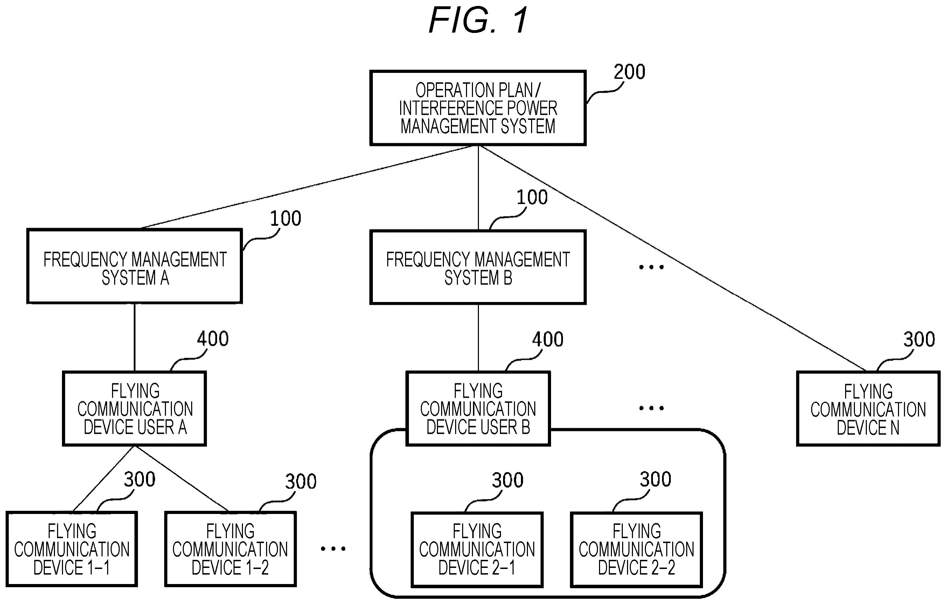

Fig. 1 illustrates a system model according to the present disclosure. Four types of entities are illustrated: a frequency management system 100, an operation plan/interference power management system 200, a flying communication device 300, and a flying communication device user 400. Flying communication devices 1-1, 1-2, 2-1, 2-2, ..., N are illustrated as the flying communication device 300. Flying communication device users A, B, ... are illustrated as the flying communication device users 400. The frequency management system 100 is connected to the operation plan/interference power management system 200 in a wireless or wired manner. The communication control device according to the present disclosure corresponds to the operation plan/interference power management system 200, the frequency management system 100, or a set of the frequency management system 100 and the operation plan/interference power management system 200.

Three types of system models are illustrated in Fig. 1. In the first system model, an architecture is assumed in which the flying communication device user A transmits and receives information to and from the frequency management system 100, and the user steers the flying communication devices 1-1 and 1-2 under the control of the user. At this time, it is assumed that the same device is used for transmitting and receiving information to and from the frequency management system 100 and for piloting the flying communication devices 1-1 and 1-2. In the second system model, the flying communication device user B transmits and receives information to and from the frequency management system 100 using a certain device. Thereafter, it is assumed that the user 2 uses another device to pilot the flying communication devices 2-1 and 2-2. Furthermore, in the third system model, it is assumed that the flying communication device N transmits and receives information to and from the operation plan/interference power management system 200 and autonomously flies. As described above, the flying communication device may transmit and receive information to and from the operation plan/interference power management system 200 without the use of the flying communication device user.

In the present disclosure, a flying communication device and a flying communication device user will be described as an example, but application examples of the present invention are not limited thereto. Specifically, the flying communication device and the flying communication device user may be replaced with a mobile communication device and a mobile communication device user, respectively. The flying communication device and the flying communication device user may be replaced with a movable communication device and a movable communication device user, respectively. The mobile communication device may be movable in a three-dimensional direction or may be movable only in a two-dimensional direction. Here, the mobile communication device may be a flying communication device such as a UAS, may be a communication device that moves in the ground or under water, or may be a communication device in which the installation position is assumed to move.

In addition, the term "operation" in the present specification and the drawings may be replaced with the term "travel" or "movement". For example, the operation plan may be read as a movement plan.

Although three types of system models are illustrated in the example of Fig. 1, two of them may be implemented in combination, or only one of them may be implemented. In addition, a model other than the above three types of system models may be used. For example, the operation plan/interference power management system 200 may be implemented in one entity or separately implemented in multiple entities. The set of the frequency management system 100 and the operation plan/interference power management system 200 may be implemented as one entity.

Furthermore, in the present disclosure, frequency allocation for CNPC is assumed, but frequency allocation for payload communication is also possible. The flying communication device may be configured to transmit and receive signals and messages to and from one or more terminal devices (not illustrated).

For example, the signal or the message may include the following information.

· PRACH transmission resource of target cell
· PRACH transmission preamble sequence of target cell
· Cell ID of Target cell

· Uplink/Downlink carrier frequency of target cell

·Bandwidth of target cell

·Terminal specific ID (C-RNTI) after handover

·Radio Resource Configuration after handover

·Condition for updating information set related to handover

· Trigger information for implementing handover

· Timing advance information of Target cell

· SSB index of Target cell

· Information regarding transmission weight

· 2-Information regarding STEP initial access

Information regarding a trigger to perform handover to the target cell may include, for example, the following information.

· RSRP information of target cell candidate

· RSRQ information of target cell candidate

· RSSI information of target cell candidate

· Timer information regarding handover execution of target cell candidate

· Information regarding start time of handover execution of target cell candidate

· Information regarding operation after timer for handover execution of target cell candidate expires

· Operation in case where synchronization signal of cell other than target cell candidate is received

Information regarding detachment execution from a source cell may include, for example, the following information.

· RSRP information of source cell

· RSRQ information of source cell

· RSSI information of source cell

· Information regarding timer that performs detachment from source cell

· Information regarding time at which detach is performed from source cell

· Information regarding execution of detach from source cell

· RSRP threshold information of non-ground communication cell

· RSRQ threshold information of non-ground communication cell

· RSSI threshold information of non-ground communications cell

· Information regarding timer for conducting movement from inside of non-ground communication cell to outside of non-ground communication cell

· Information regarding time of performing movement from inside of non-ground communication cell to outside of non-ground communication cell

· Information regarding execution of movement from inside of non-ground communication cell to outside of non-ground communication cell

The flying communication device is a device that performs wireless communication while flying. For example, UAS is a representative example. The flying communication device performs a flight on the basis of radio parameters (for example, frequency channel and maximum allowable transmission power) approved by the frequency management system 100 and an operation plan. Hereinafter, unless otherwise specified, the term "communication device" refers to a flying communication device. Furthermore, hereinafter, the operation plan generated by the frequency management system 100 is referred to as an "adjusted operation plan".

The flying communication device user is generally a company or a user who steers and operates the flying communication device for which device authentication has been obtained. Note that the user may be a controller or a control device that simply operates the flying communication device in addition to the company or the user. The flying communication device user plays, for example, the following roles. · An operation plan of its own flying communication device is transmitted to the frequency management system 100 before the start of operation. Note that a plurality of operation plans may be applied for at a time.

· On the basis of the radio parameters and the adjusted operation plan approved by the frequency management system 100, the radio parameters and the operation route of the flying communication device are set, and the operation is carried out.

· In a case where an operation permission cannot be obtained for an operation plan that has been applied once, the operation plan information may be changed and the operation application may be applied again.

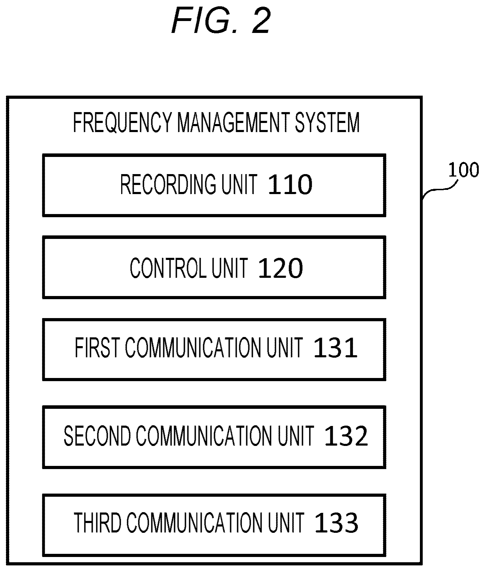

Fig. 2 illustrates a configuration of a frequency management system 100 according to the present disclosure. The frequency management system 100 is an entity that allocates radio parameters (frequency channel and the like) to the flying communication device 300, adjusts an operation plan, and the like.

A first communication unit 131 is a functional block that receives information from the flying communication device user 400 and transmits information to the flying communication device user 400. Details of this functional block will be described later.

A second communication unit 132 is a functional block that receives information from the operation plan/interference power management system 200 and transmits information to the operation plan/interference power management system 200. Details of this functional block will be described later.

A third communication unit 133 is a functional block that receives information from an entity (for example, the Federal Aviation Administration (FAA) and the like) other than the frequency management system 100 and transmits information. In a case where information is transmitted to and received from the FAA, the present functional block transmits and receives flight prohibited area information and the like defined by the FAA.

A control unit 120 is a functional block that adjusts the radio parameters and the operation plan of the flying communication device 300 using the information recorded in a recording unit 110. Details of this functional block will be described later.

The recording unit 110 is a functional block that records information acquired in advance for processing performed by the control unit 120, information acquired from the flying communication device user 400, information acquired from the operation plan/interference power management system 200, information acquired from the FAA, information acquired from entities other than these, and information generated by the control unit 120.

The communication control device according to the present disclosure may include all or some of the components 110, 120, and 131 to 133 described above included in the frequency management system 100 in Fig. 2.

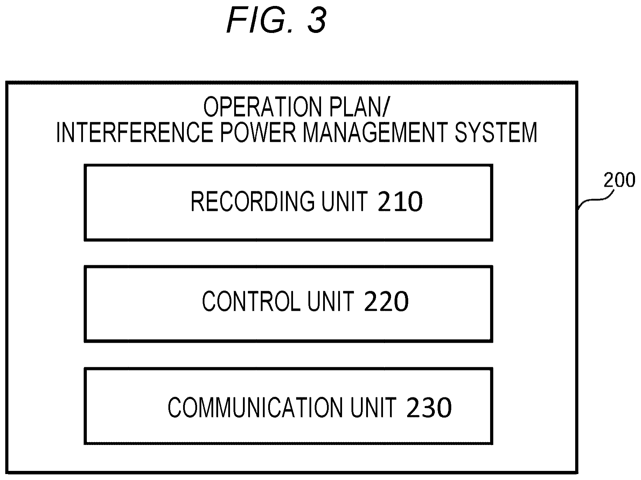

Fig. 3 illustrates a configuration of the operation plan/interference power management system 200 according to the present disclosure. The operation plan/interference power management system 200 is an entity that manages adjusted operation plans generated by the plurality of frequency management systems 100 and a cumulative interference power map to be described later. The operation plan/interference power management system 200 has a function of performing approval processing of the adjusted operation plan transmitted from the plurality of frequency management systems 100 on the basis of the cumulative interference power map. In a case where there is only one frequency management system 100, the operation plan/interference power management system 200 may be omitted.

A recording unit 210 is a functional block that records various types of information from the frequency management system 100.

A control unit 220 is a functional block that performs approval processing of the adjusted operation plan received from each frequency management system 100 using the information recorded in the recording unit 210. Details of this functional block will be described later.

A communication unit 230 is a functional block that receives information from the frequency management system 100 and transmits information to the frequency management system 100.

The communication control device according to the present disclosure may include all or some of the components 210, 220, and 230 described above included in the operation plan/interference power management system 200 of Fig. 3.

<2 Flow until start of operation>

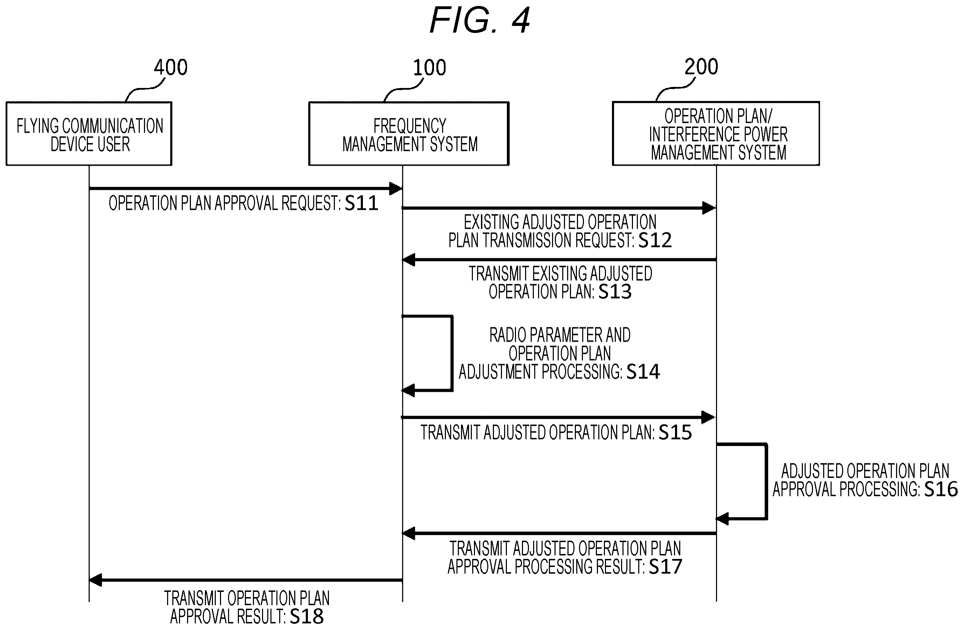

Fig. 4 illustrates an example of an operation start procedure according to the present disclosure. On the basis of the procedure illustrated in Fig. 4, the flying communication device user 400 starts operation of his/her own communication device 300.

First, a procedure of operation plan approval request transmission and adjusted operation plan transmission will be described, and then updating and canceling of registration information in the frequency management system 100 will be described.

(2.1 Operation plan approval request transmission and adjusted operation plan transmission processing)

First, in a case of newly operating one or more flying communication devices 300, the flying communication device user 400 who operates the communication device 300 transmits an operation plan approval request for the communication device 300 to the frequency management system 100 (S11). Here, the operation plan approval request desirably includes at least the following parameter information (thereafter, operation approval necessary information) for each of the flying communication devices 300. The operation approval necessary information related to the communication device 300 corresponds to request information regarding movement of the communication device 300.

· Operation plan approval request identification ID
· Operation plan approval request application date and time (UNIX time, UTC time, or the like)
· Flying communication device user identifier
· Flying communication device identifier

- Device serial number
- Device authentication number (identifier indicating passing of device authentication such as FCC ID)

· Desired operation plan information

- Route information

--- Complete route information (latitude, longitude, altitude, and the like of each point on route)
--- Departure and arrival point information (latitude, longitude, altitude, and the like)
--- Desired license area information (latitude, longitude, altitude, and the like)
--- Desired passing point information (latitude, longitude, altitude, and the like)

- Designated operation time information

--- Operation start time (UNIX time, UTC time, or the like)
--- Operation end time (UNIX time, UTC time, or the like)

Operation time requirement information

--- Minimum operation start time (UNIX time, UTC time, or the like)
--- Minimum operation end time (UNIX time, UTC time, or the like)

- Desired radio parameter

--- Frequency channel (center frequency + channel bandwidth, combination of lower limit and upper limit frequency, predefined channel identifier, or the like)
--- Transmission power (EIRP or the like)

· Flying communication device function information

- Flight speed (normal speed, maximum speed, minimum speed, or the like)
- Operable frequency range
- Maximum transmission power (EIRP or the like)
- Antenna information (antenna gain, antenna type, and the like)
- Noise power
- Interference protection criterion information (SIR, SINR, INR, or the like)

For an operation plan approval request identification ID, the flying communication device user 400 allocates a unique value to each operation plan approval request.

The operation plan approval request application date and time indicates the date and time when the flying communication device user 400 applied for an operation plan. In the present disclosure, as described in chapter 3, in order to adjust the radio parameters and the operation plan of each communication device on the basis of the first-come first-served principle, the frequency management system 100 refers to the operation plan approval request application date and time at the time of the processing. Note that, by many flying communication device users 400 making operation applications in a short time, access to the operation plan/interference power management system 200 and the frequency management system 100 is concentrated, which may cause some network trouble. While the server of the operation plan/interference power management system is not functioning due to this event, for example, the frequency management system 100 may not be able to normally receive the operation plan approval request. As a result, frequency channel allocation processing, approval processing of the operation plan, and the like cannot be performed in ascending order of the operation plan approval request application date and time, and consequently, unfairness occurs in the approval processing order. Thus, for example, the frequency management system 100 may provide a reception period of the operation plan approval request for a certain period of time, and may process the operation plan approval request in an order of an earlier received operation plan approval request application date and time. Furthermore, the operation plan approval request may be configured to be processed in ascending order of reception date and time.

A flying communication device user identifier and a flying communication device identifier are identifiers for uniquely identifying each communication device user and each communication device, respectively, and unique values are allocated to each communication device user and each communication device.

Desired operation plan information is an operation plan desired by the flying communication device 300, and is important information for obtaining operation approval. The desired operation plan information includes at least one of route information, designated operation time information, operation time requirement information, and a desired radio parameter.

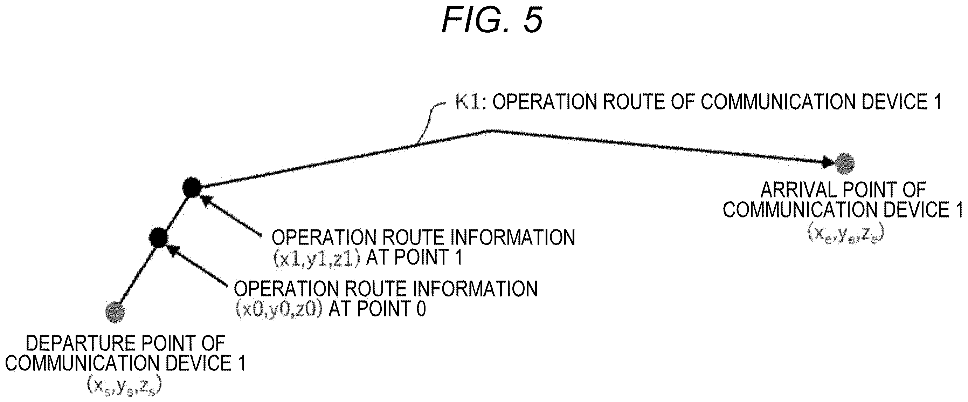

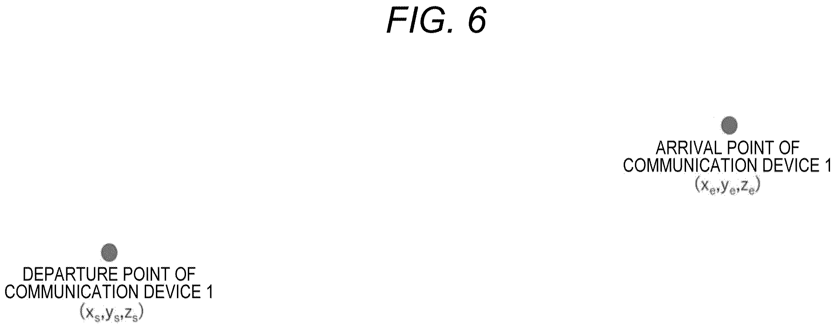

As for the route information, there are at least two types of complete route information and departure and arrival point information, and the flying communication device user 400 needs to include at least one of these pieces of information in the desired operation plan information. Note that both pieces of information may be designated. The complete route information indicates latitude, longitude, altitude, and the like at each point on the operation route of the flying communication device 300, and means that the operation route is completely designated as illustrated in Fig. 5. Fig. 5 illustrates an example of the complete route information. On the other hand, as illustrated in Fig. 6, departure and arrival point information represents only departure point and arrival point information (for example, latitude, longitude, altitude, and the like) of the flying communication device. Fig. 6 illustrates an example of the departure and arrival point information.

In addition, the desired license area information may be included in the route information, indicating that the flying communication device 300 can exclusively use a frequency or a frequency channel at any point in the area indicated by the desired license area information. If necessary, the flying communication device user may include the information in the operation approval necessary information. In addition, the desired passing point information indicates point information through which the flying communication device 300 desires to fly in the route between the departure and arrival points, and the frequency management system 100 may utilize the information when adjusting the operation route. In other words, while the above-described departure and arrival point information includes information or the like indicating points of a start point and an end point at which the operation is desired, desired additional point information may include information or the like regarding a point or a region desired to be included in the travel route other than the start point and the end point at which the operation is desired.

The designated operation time information indicates a time during which the flying communication device operates, and includes at least two pieces of operation start time and operation end time. The operation start time indicates a time at which the flying communication device starts operation, and the operation end time indicates a time at which the flying communication device ends operation.

Finally, the operation time requirement information is requirement information regarding the operation time of the flying communication device, and includes at least the minimum operation start time and the minimum operation end time. The minimum operation start time means that the flying communication device needs to start operation from the time at the latest. On the other hand, the minimum operation end time indicates that the flying communication device needs to end the operation by the time at the latest.

The flying communication device user 400 needs to designate designated operation time information or operation time requirement information. Note that both pieces of information may be designated.

Flying communication device function information is various types of information regarding the flying communication device, and the frequency management system 100 uses these pieces of information as necessary to adjust the radio parameters and the operation plan.

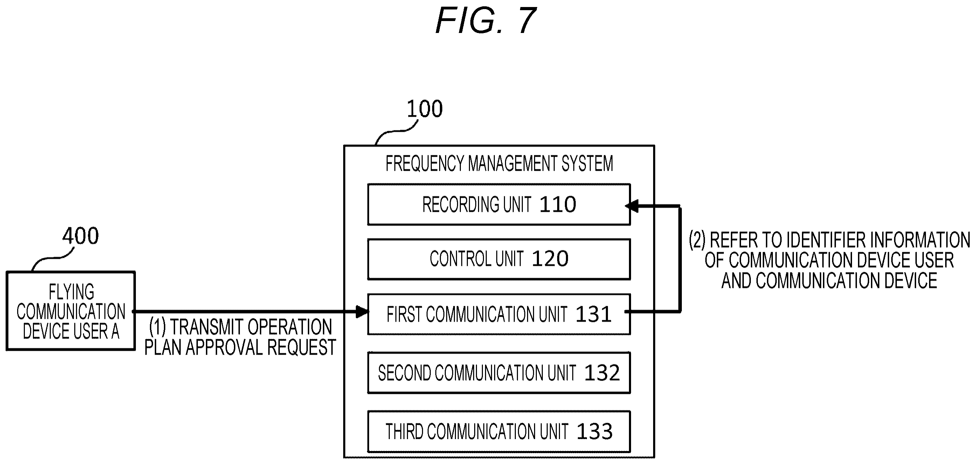

Fig. 7 illustrates an operation example when the frequency management system 100 receives the operation plan approval request.

First, as illustrated in Fig. 7, in a case where the first communication unit 131 receives the operation plan approval request from the flying communication device user 400 ((1) in the drawing), the frequency management system 100 acquires the operation approval necessary information from the operation plan approval request. Next, the frequency management system 100 extracts the flying communication device user identifier and the flying communication device identifier from the operation approval necessary information, and checks whether these identifiers are recorded in the recording unit 110 ((2) in the drawing).

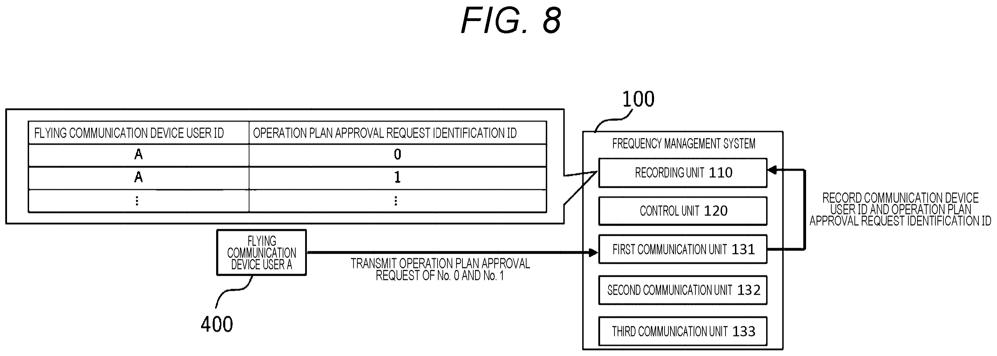

In a case where each identifier is not recorded in the recording unit 110, it means that the flying communication device user 400 and the flying communication device 300 corresponding to each identifier have transmitted the operation plan approval request for the first time. In this case, as illustrated in Fig. 8, the frequency management system 100 associates the operation plan approval request ID with the flying communication device user identifier, and records the operation plan approval request ID in the recording unit 110. Fig. 8 illustrates an example in which the operation plan approval request ID is associated with the flying communication device user identifier and recorded in the recording unit 110. By referring to this ID, the frequency management system 100 can identify the operation plan approval request.

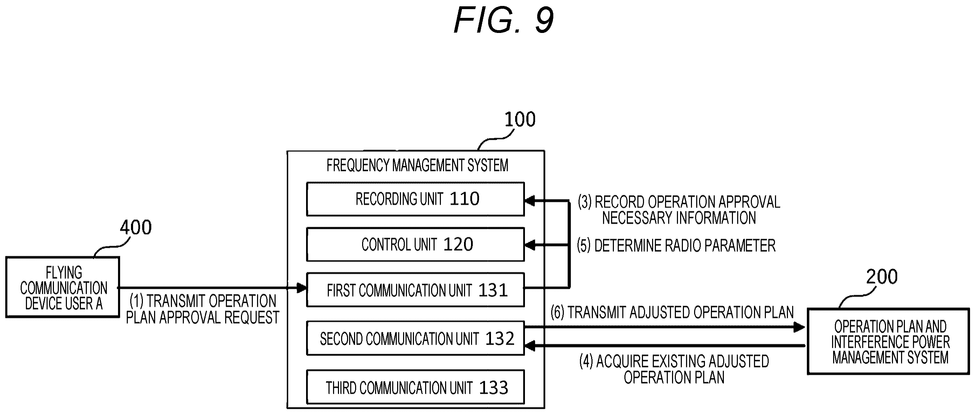

Fig. 9 illustrates an example of an operation subsequent to Fig. 7. In a case where the operation approval necessary information is correctly (for example, in a correct format) stored in the transmitted operation plan approval request, the frequency management system 100 registers the operation approval necessary information in the recording unit 110 as illustrated in Fig. 9 ((3) in the drawing).

The frequency management system 100 acquires an existing adjusted operation plan by another frequency management system 100 from the operation plan/interference power management system 200 ((4) in the drawing, S12 and S13 in Fig. 4), and determines radio parameters of the flying communication device 300 and adjusts the operation plan in the control unit 120 in consideration of interference calculation, collision avoidance, and the like (details will be described later) on the basis of the acquired another existing adjusted operation plan ((5) in the drawing, S14 in Fig. 4). After generating the adjusted operation plan of the flying communication device 300, the frequency management system 100 transmits the adjusted operation plan (including the adjusted radio parameters) of the flying communication device 300 to the operation plan/interference power management system 200 via the second communication unit 132 ((6) in the drawing, S15 in Fig. 4). The operation plan/interference power management system 200 approves the adjusted operation plan (S16 in Fig. 4). The frequency management system 100 receives the result of the approval processing for the adjusted operation plan from the operation plan/interference power management system 200 (S17), and transmits the result of the approval processing to the flying communication device user 400 (S18).

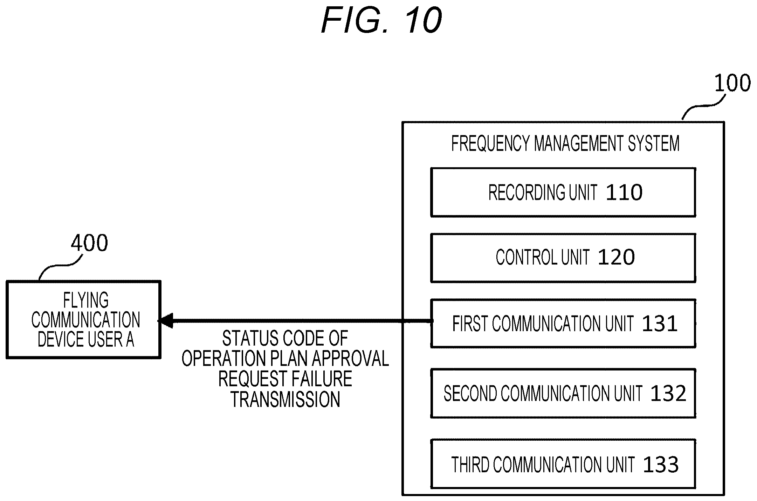

On the other hand, in a case where a part or all of the operation plan approval request information is not correctly stored, as illustrated in Fig. 10, the frequency management system 100 does not register the operation approval necessary information in the recording unit 110, and transmits the flying communication device user identifier, the flying communication device identifier, the missing information, and a status code of failure of the operation plan approval request to the flying communication device user 400 via the first communication unit 131. Fig. 10 illustrates an operation example of the frequency management system 100 in a case where a part or all of the operation plan approval request information is not correctly stored.

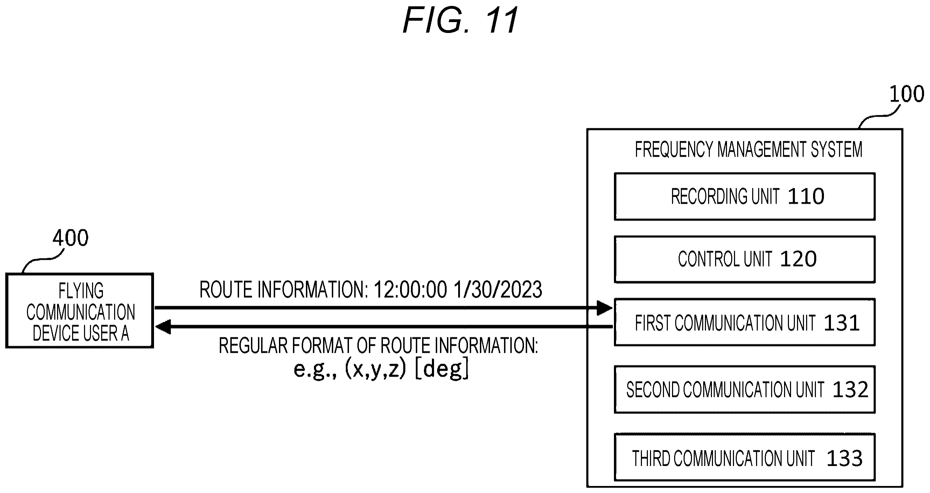

Note that the missing information indicates information that is not correctly stored among the operation approval necessary information described above and a regular format of the information. Fig. 11 illustrates an example in which the frequency management system 100 transmits missing information to the flying communication device user 400. In a case where time information is included in the route information received from the flying communication device user 400, the frequency management system 100 transmits information (time information in this example) that is not correctly stored and the regular format of the route information as missing information to the flying communication device user 400.

In addition, it is assumed that a unique value is allocated to the status code of the operation plan approval request failure according to error contents of various types of information. For example, in a case where the desired operation route information itself is not included, 404 or the like may be returned as a status code. After receiving the status code of the operation plan approval request failure, the flying communication device user 400 may correct the operation plan information and apply again.

In a case where the flying communication device user identifier and the flying communication device identifier have been registered in the recording unit 110, the frequency management system 100 checks the transmitted operation plan approval request, and in a case where all pieces of the operation approval necessary information have been correctly stored, the frequency management system 100 registers the operation approval necessary information in the recording unit 110 ((3) in the drawing). Thereafter, an existing adjusted operation plan by another frequency management system 100 is acquired from the operation plan/interference power management system 200 ((4) in the drawing, S12 and S13 in Fig. 4), and the control unit 120 performs determination of radio parameters of the flying communication device 300, adjustment of the operation plan, and the like ((5) in the drawing, S14 in Fig. 4). The frequency management system 100 transmits the adjusted operation plan together with the radio parameters to the operation plan/interference power management system 200 via the second communication unit 132 ((6) in the drawing, S15 in Fig. 4). The operation plan/interference power management system 200 approves the adjusted operation plan (S16). The frequency management system 100 receives the result of the approval processing for the adjusted operation plan from the operation plan/interference power management system 200 (S17), and transmits the result of the approval processing to the flying communication device user 400 (S18). Note that, in a case where a part or all of the operation plan approval request information is not correctly stored, the frequency management system 100 does not register various types of information in the recording unit 110, and transmits missing information and the status code of the operation plan approval request failure to the flying communication device user 400 via the first communication unit 131.

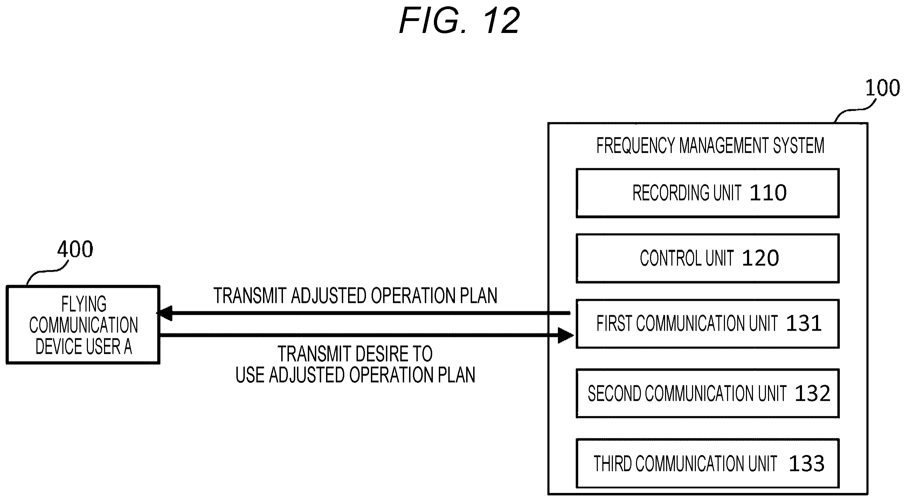

In addition, the frequency management system 100 may perform operation illustrated in Fig. 12 in a case where it is determined that the frequency cannot be used in the operation plan applied by the communication device user 400 or in a case where the adjusted operation plan cannot be generated. Fig. 12 illustrates an example of an operation performed in a case where the frequency management system 100 determines that the frequency cannot be used in the applied operation plan or that the adjusted operation plan cannot be generated. As illustrated in Fig. 12, the frequency management system 100 generates an adjusted operation plan in which the operation time and the like are changed, and provides the adjusted operation plan to the flying communication device user 400. In a case where it is desired to use the provided adjusted operation plan, the flying communication device user 400 transmits this desire to the frequency management system 100. Note that interference calculation to be described later is also used for generation of the adjusted operation plan in which the operation hours and the like are changed.

(2.2 Update and cancellation of registration information in frequency management system 100)

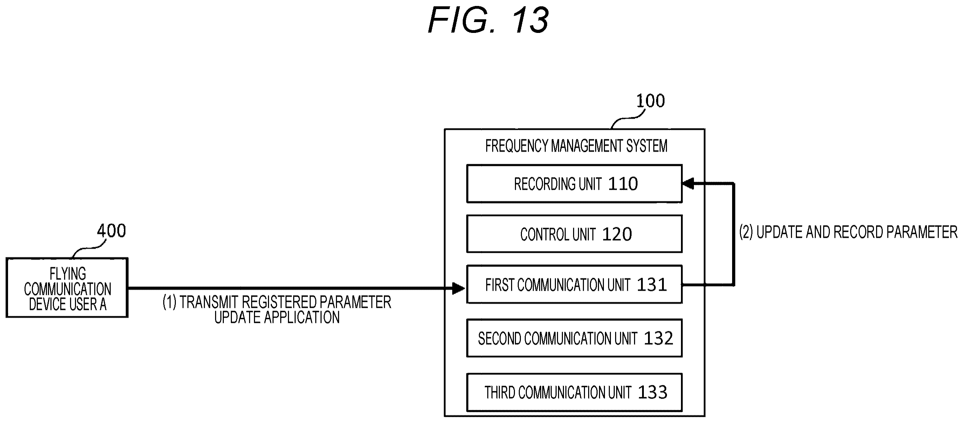

Next, update of the registration information in the frequency management system 100 will be described. Fig. 13 illustrates an example of updating the registration information in the frequency management system 100. In a case where the flying communication device user 400 requests the frequency management system 100 to update a parameter registered in the frequency management system 100, the flying communication device user 400 requests the frequency management system 100 to update the information ((1) in the drawing). The frequency management system 100 changes the parameter and records the updated parameter in the recording unit 110 ((2) in the drawing).

At this time, in a case where the changed parameter is used during interference calculation, the frequency management system 100 needs to perform interference calculation again after updating the parameter. In a case where the update cannot be accepted due to the interference calculation again, the change of the parameter described above may be canceled and the application may be rejected. Note that it is assumed that the flying communication device user 400 applies for update of registration information before and during flight, and in the present disclosure, the frequency management system 100 performs, for example, the following two patterns of processing.

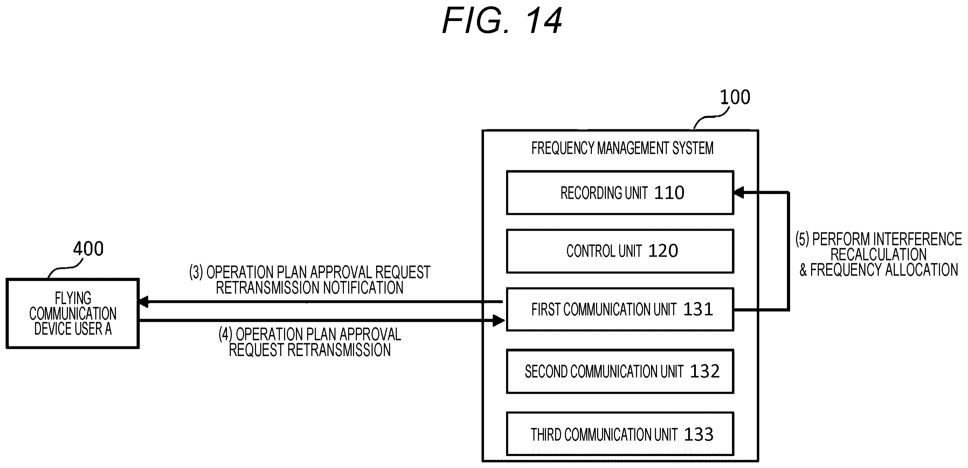

Fig. 14 illustrates an example of processing of a first pattern as processing of the frequency management system 100 regarding the interference calculation again. As illustrated in Fig. 14, for the flying communication device user 400 who has applied for updating the registration information, the frequency channel usage right of the communication device user 400 is temporarily canceled, and a notification is given to transmit the operation plan approval request to the communication device user 400 again ((3) in Fig. 3). Thereafter, the flying communication device user 400 retransmits an operation plan approval request including the changed operation plan to the frequency management system 100 ((4) in the drawing). The frequency management system 100 receives the operation plan information included in the retransmitted operation plan approval request in the first communication unit 131, and performs interference calculation and frequency allocation again using the operation plan information ((5) in the drawing). At this time, the flying communication device user 400 may cause the communication device 300 in flight to land on the ground once. Note that, even in a case where the communication device 300 becomes difficult to operate due to external factors such as approach of an emergency vehicle and bad weather, the flying communication device user 400 may cause the communication device 300 to land on the ground once and retransmit the operation plan approval request to the frequency management system 100.

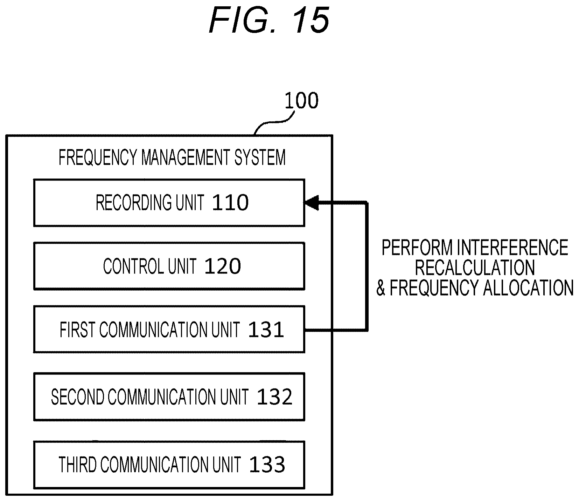

Fig. 15 illustrates an example of processing of the second pattern as the processing of the frequency management system 100 regarding the interference calculation again. As illustrated in Fig. 15, the interference calculation is performed again for the flying communication device user 400 who has applied for update of the registration information without canceling the frequency channel usage right of the communication device user, and the frequency channel is allocated on the basis of the result.

In the case of the processing in Fig. 14 described above, the operation of the flying communication device 300 is temporarily stopped, which is safer processing. Therefore, in a case where the communication device 300 is in the pre-flight state or the in-flight state, the frequency management system 100 preferably performs the processing of Fig. 14. On the other hand, the latter does not stop the operation of the flying communication device 300, and performs processing of operation approval on the basis of a result of interference recalculation. If such processing is performed on the communication device 300 in flight, the communication device user 400 changes the parameters of his/her operation plan, which may cause interference with the communication device 300 flying ahead. Therefore, the latter processing may be applied only to the communication device 300 before flight.

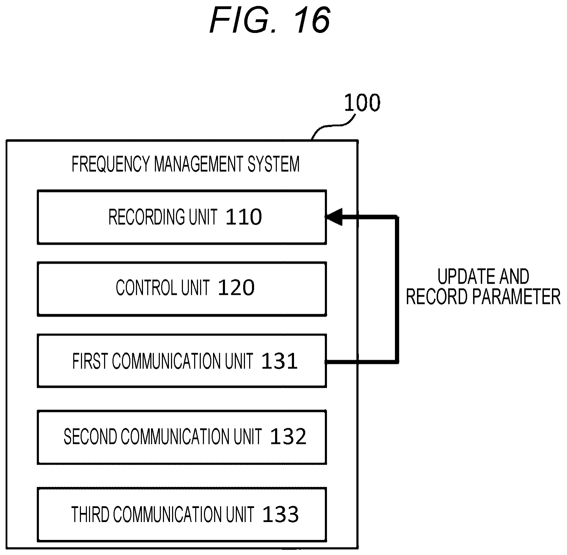

Note that the parameters used for interference calculation includes at least the desired operation plan information or the flying communication device function information in the operation plan approval request. Therefore, in a case where at least one parameter of these pieces of information is changed, the frequency management system 100 performs parameter update and interference recalculation on the basis of the above processing, and reallocates the frequency channel. Note that it is also conceivable to use other parameters, that is, parameters other than the desired operation plan information and the flying communication device function information, at the time of interference calculation. In a case where there is a request for updating the parameter from the flying communication device user 400, the frequency management system 100 naturally updates the parameter and performs interference recalculation. On the other hand, in a case where the flying communication device user 400 applies for updating other parameters, that is, parameters other than the desired operation plan information and the flying communication device function information, and the parameters are not used at the time of interference calculation, the frequency management system 100 performs only the processing of updating the parameters without performing interference calculation as illustrated in Fig. 16. Fig. 16 illustrates an example in which parameters are updated and recorded without performing interference calculation.

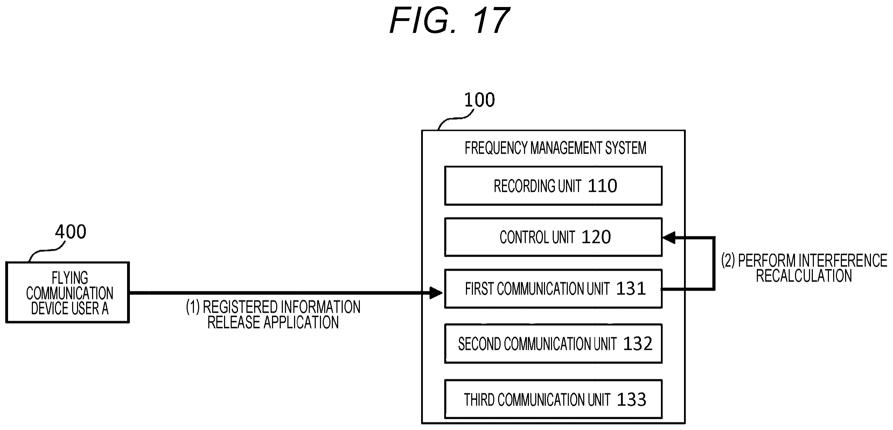

Next, cancellation of registration information in the frequency management system 100 will be described. Fig. 17 illustrates an operation example of canceling the registration information in the frequency management system 100. In a case where the flying communication device user 400 who operates the communication device 300 that has already transmitted an operation plan approval request and is flying according to an approved operation plan desires to cancel the operation of the communication device 300 for some reason (for example, a flight prohibition recommendation from the FAA), as illustrated in Fig. 17, the communication device user 400 (user A in the example of the drawing) applies to the frequency management system 100 for cancellation of the registration information of the communication device 300 ((1) in the drawing).

After the first communication unit 131 receives the cancellation application, the frequency management system 100 excludes or deletes the operation plan of the communication device 300 for which the cancellation application for the registration information has been made, and the control unit 120 performs interference calculation again on the existing operation plan ((2) in the drawing).

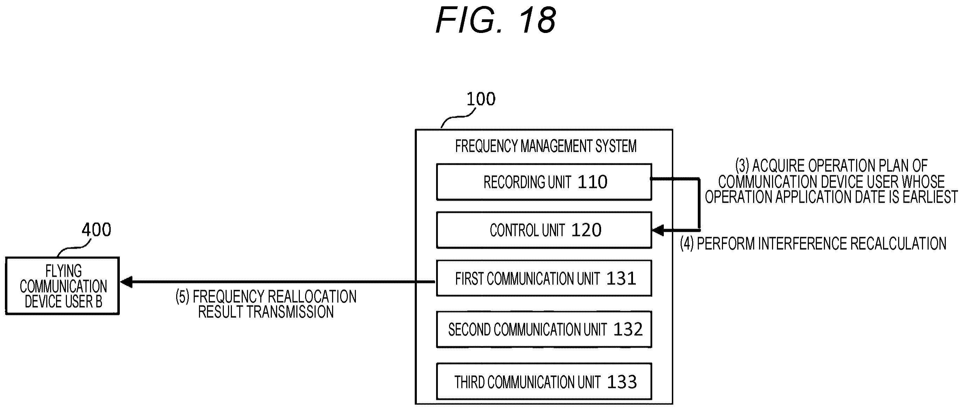

Here, there is a case where a spatial and temporal vacant frequency can be secured by excluding the operation plan of the communication device 300. Fig. 18 illustrates an example of processing performed by the frequency management system 100 in a case where a spatial or temporal vacant frequency can be secured by excluding the operation plan of the communication device 300. The frequency management system 100 extracts, from the recording unit 110, information of the communication device user 400 (the user B in the example of the drawing) with the earliest application date and time among the communication device users 400 operating the communication devices determined to be inoperable once by the interference calculation ((3) in the drawing). Thereafter, the control unit 120 performs interference calculation again on the basis of the operation plan of the communication device user 400, and performs allocation of frequency channel and the like in a case where the allocation is possible ((4) in the drawing). Cumulative interference power is calculated in all the communication devices, and as long as the cumulative interference power is equal to or less than the allowable value, the operation including the selection of the communication device user 400 and the allocation of the frequency channel is repeatedly performed again. Thus, it is possible to allocate a frequency channel or the like to one or more communication devices once determined to be inoperable without transmitting a request from the communication device user again. Thereafter, the frequency management system 100 transmits a frequency channel reallocation result and the like to the flying communication device user 400 ((5) in the drawing).

<3 Processing content in control unit 120 of frequency management system 100>

Next, processing in the control unit 120 of the frequency management system 100 will be described in detail. In the present disclosure, the frequency management system 100 determines radio parameters (frequency channel, maximum allowable transmission power, and the like) of the communication device 300 and adjusts the operation plan on the basis of the first-come first-served principle. First, main ideas in the present method will be described. Thereafter, determination of radio parameters and adjustment of an operation plan based on main ideas will be described.

(3.1 Main idea in radio parameters and operation plan adjustment processing)

A main idea of the present method is, for example, to determine whether or not the frequency can be used at a point outside the operation route of each communication device flying ahead (a point not included in the operation route of each communication device) on the basis of interference calculation.

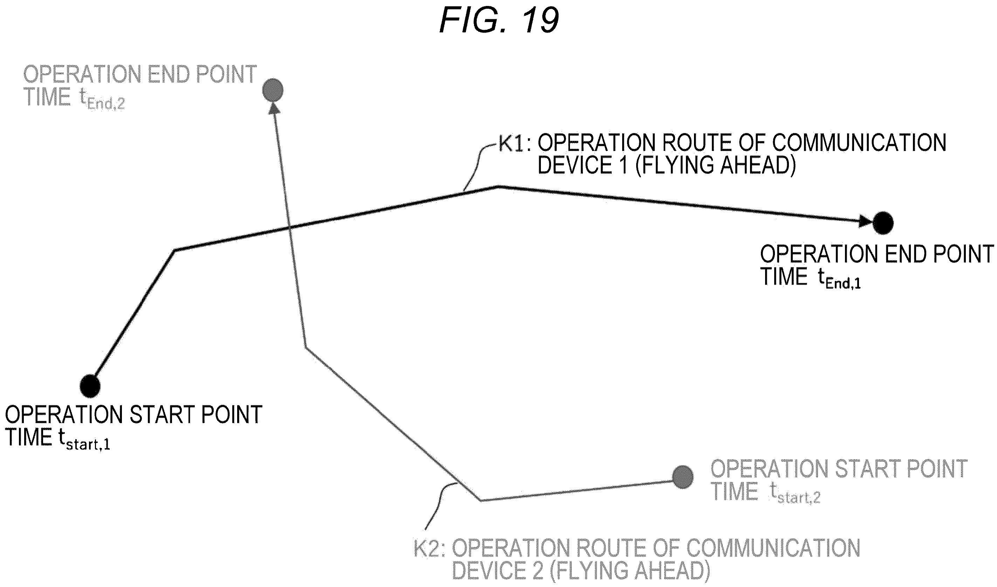

Fig. 19 illustrates a situation in which the communication device 1 and the communication device 2 are flying ahead using the same frequency channel. The communication device 1 is flying on an operation route K1 on the basis of the operation plan. The communication device 2 is flying on an operation route K2 on the basis of the operation plan. The flight start time in the operation plan of the communication device 1 is $t_{start,\ 1}$, and the flight end time is $t_{End,1}$. The flight start time in the operation plan of the communication device 2 is $t_{start,\ 2}$, and the flight end time is $t_{End,2}$. Here, a situation in which the communication device 1 and the communication device 2 are already flying is assumed, but it may be a situation in which the communication device 1 and the communication device 2 are not flying yet and are scheduled to fly.

Here, information in a grid format in which a space in which the communication device 1 and the communication device 2 can fly is divided into unit regions (cells) at equal intervals is considered. It is determined whether the same frequency channel as the frequency channel used by the communication device 1 and the communication device 2 can be used in a cell that does not include the operation routes of the communication device 1 and the communication device 2 at each time among the cells in the grid format. By such processing, the map information (thereafter, the frequency availability map or the frequency availability map information) indicating whether or not the frequency can be used in each cell (unit region) can be generated. The frequency management system 100 may specify a geographical range for creating the frequency availability map in three-dimensional coordinates (latitude, longitude, altitude, and the like) or a two-dimensional plane. The shape of the specified range may be any shape regardless of whether it is two-dimensional or three-dimensional. In addition, in this example, each cell is represented in a grid format in which a three-dimensional space is divided at equal intervals, but each cell may be represented by another space division method.

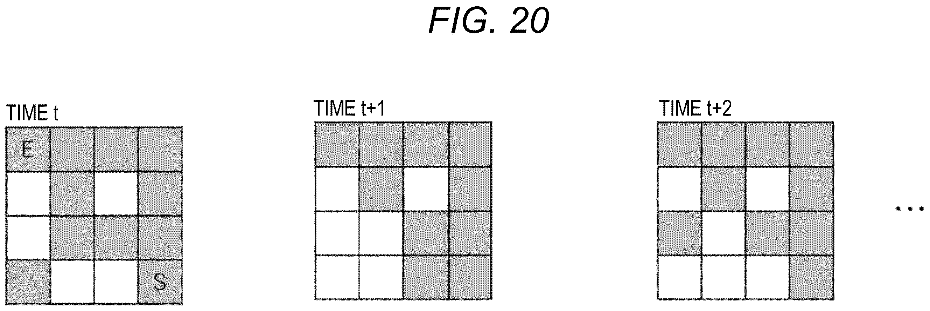

Fig. 20 illustrates an example of a frequency availability map representing a flight space in a two-dimensional 4×4 grid format. The filled squares correspond to cells in which a frequency can be used by a new communication device X at corresponding times t, t+1, t+2, ... and so on. That is, the new communication device X can use the frequency anywhere in the cell. The cell (unit region) that can use the frequency in this manner is also referred to as a first region. Furthermore, a point S and a point E in the drawing are cells including an operation start point and an operation end point of the communication device X, respectively. The cell (unit region) including the point S and the point E may be the first region.

The two-dimensional frequency availability map represented by a two-dimensional grid as illustrated in Fig. 20 is effective in a case where the altitude of each communication device is constant over the entire route. In a case where the altitude of each communication device is not constant, a frequency availability map in which a three-dimensional space is represented by a three-dimensional grid may be used. Furthermore, the range in which the frequency availability map is created is a square in the example of Fig. 20, but may be a cube, a rectangle or a rectangular parallelepiped, a range including another curve, a curved surface, or the like, or a range generated by a combination of a square and a cube. By creating the frequency availability map, it is possible to adjust the operation plan in addition to determining the radio parameters of the new communication device X.

In a case where an operation route candidate of the new communication device X is extracted from the frequency availability map described above, the frequency management system 100 performs, for example, one of the following two patterns of processing.

Pattern 1: Extract only a cell (first region) in which a frequency is available at all times
Pattern 2: Extract a cell (first region) in which a frequency is available at each time

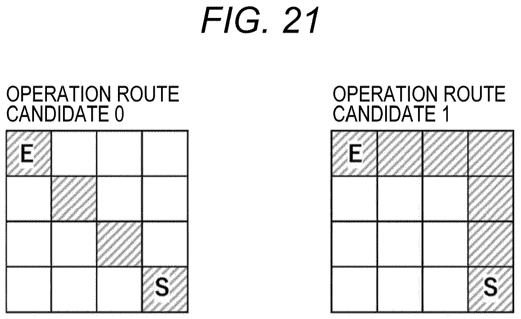

An example of processing of Pattern 1 will be described. When only a cell (first region) in which a frequency is available at all times is extracted from the frequency availability map corresponding to each time in Fig. 20 described above, two candidates can be generated as operation route candidates from the point S to the point E as illustrated in Fig. 21. In the operation route candidate, the communication device can continue to pass through only the first region (cell in which a frequency is available) from the point S to the point E. The left diagram in Fig. 21 illustrates a first candidate (operation route candidate 0), and the right diagram illustrates a second candidate (operation route candidate 1). Note that the shaded square represents a cell in which a frequency is available at all times. In this method, the communication device X can use the frequency at any position in the shaded cell at any time within its operation time.

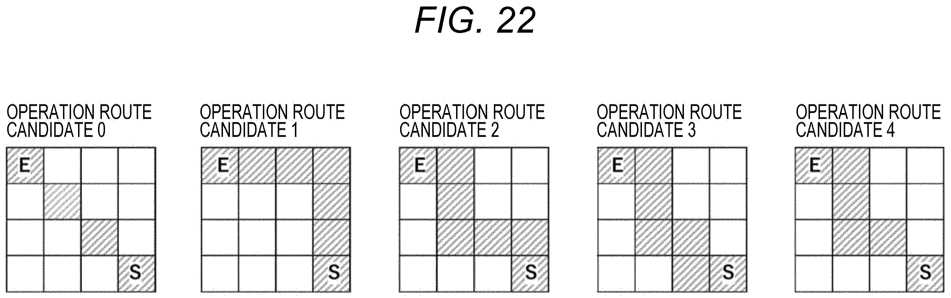

On the other hand, when a cell in which a frequency is available at each time is extracted from the frequency availability map corresponding to each time in Fig. 20, five operation route candidates can be generated as illustrated in Fig. 22. Fig. 22 illustrates the operation route candidates 0 to 4 as the generated five candidates. In the operation route candidates 0 to 4, the communication device can continue passing through only the first region (cell in which a frequency is available) from the point S to the point E. In Fig. 22, each hatched cell represents a cell in which a frequency is available at least only at a certain time, and thus the number of operation route candidates is larger than that in Fig. 21. In Fig. 22, since the frequency availability varies depending on the time even in the same cell, the flying communication device user 400 needs to operate the communication device X accurately in accordance with the operation time.

Furthermore, as a matter of course, in a case where the flight speed or the operation route of the communication device X changes, the frequency availability map also changes, and thus, in a case where the flying communication device user 400 changes the operation plan, the frequency management system 100 needs to immediately update the frequency availability map.

Note that, in a case where some or all of the operation route candidates overlap with a flight prohibited area (for example, an area prohibited by FAA regulations, and the like) or a frequency use prohibited area (for example, an exclusive zone, a quiet zone, or the like), the frequency management system 100 excludes the route from the operation route candidates.

In addition, in a case where no operation route candidate can be generated, the frequency management system 100 may perform gridding with a cell having a size different from the cell for which the frequency availability is initially determined, and may re-create the frequency availability map. For example, the 4×4 grid illustrated in Fig. 20 may be formed into a grid such that the size of one cell (unit region) such as a 5×5 grid is reduced, and the frequency availability map may be re-created.

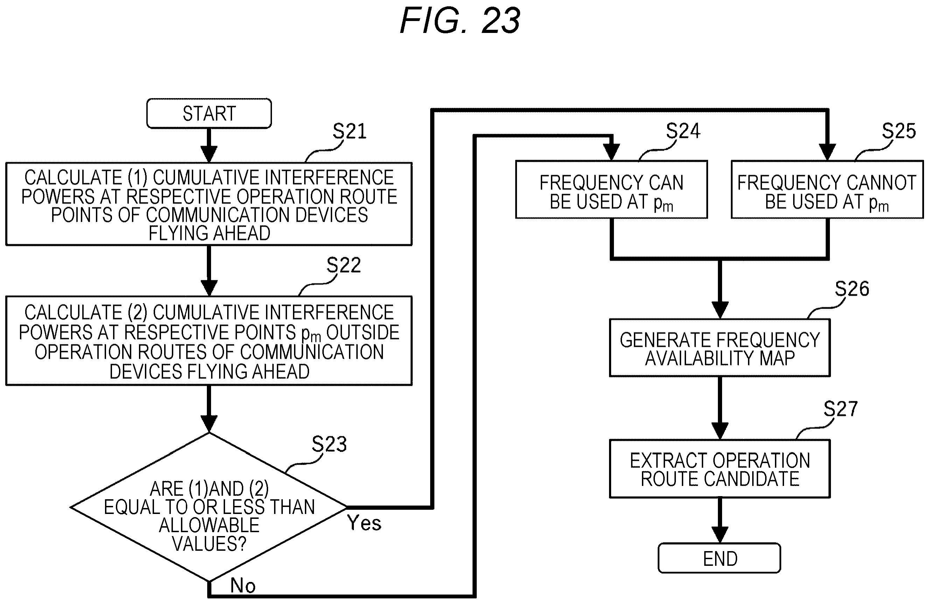

The interference calculation for creating the frequency availability map will be described with reference to Fig. 23. Fig. 23 illustrates a flowchart of processing of a procedure for creating a frequency availability map when the frequency management system 100 calculates an operation route candidate of a target communication device. Now, it is assumed that the communication device 1 and the communication device 2 are flying on the operation routes K1 and K2 illustrated in Fig. 19 described above using the same frequency channel.

Here, any points on the operation routes of the communication device 1 and the communication device 2 at each

time are $p_1(t)$ and $p_2(t)$, respectively.

Furthermore, any point outside the operation routes of the communication device 1 and the communication device 2 at each time is defined as $p_m(t)$. Moreover, it is assumed that a new communication device 3 that has not yet transmitted an operation plan is virtually present at a point $p_m(t)$. At this time, the frequency management system 100 calculates the cumulative interference powers in the communication device 1 and the communication device 2 on the basis of the following inequalities (1) and (2) and determines whether (S21 and S22) satisfies the respective allowable values (S23).

[Math. 1]

$$10^{\frac{I_{Thres,1\,[dBm]}}{10}} \geq 10^{\frac{I_{Agg,1}(t)_{[dBm]}}{10}}$$

$$+ 10^{\frac{P_{MaxEIRP,3\,[dBm]}-G_{PeakTx,3\,[dB]}+G_{Tx,3}\left(p_m(t),p_1(t)\right)_{[dB]}-L_{Path}\left(p_m(t),p_1(t)\right)_{[dB]}+G_{Rx,1\,[dB]}}{10}} \quad (1)$$

[Math. 2]

$$10^{\frac{I_{Thres,2\,[dBm]}}{10}} \geq 10^{\frac{I_{Agg,2}(t)_{[dBm]}}{10}}$$

$$+ 10^{\frac{P_{MaxEIRP,3\,[dBm]}-G_{PeakTx,3\,[dB]}+G_{Tx,3}\left(p_m(t),p_2(t)\right)_{[dB]}-L_{Path}\left(p_m(t),p_2(t)\right)_{[dB]}+G_{Rx,2\,[dB]}}{10}} \quad (2)$$

$P_{MaxEIRP,n[dBm]}$: Maximum transmission EIRP of communication device n  $G_{PeakTx,n[dB]}$: Peak antenna gain of communication device n

$G_{Tx,n}(p_n(t), p_m(t))_{[dB]}$: Antenna gain of communication device n in direction from $p_n(t)$ toward $p_m(t)$

$L_{path}(p_n(t), p_m(t))_{[dB]}$: Path loss between $p_n(t)$ and $p_m(t)$

$G_{Rx,n[dB]}$: Reception antenna gain of communication device n

$I_{Thres,n[dBm]}$: Allowable interference power of communication device n

The second term on the right side of inequalities (1) and (2) corresponds to the single station interference power given by the new communication device 3, which is hypothetically present at point $p_m(t)$, to the communication device flying ahead. In other words, the second term on the right side of inequality (1) represents the single station interference power from the communication device 3 to the communication device 1.

The second term on the right side of inequality (2) represents the single station interference power from the communication device 3 to communication device 2. Naturally, other parameters may be considered in the calculation of the single station interference power.

The $I_{Agg,n}(t)_{[dBm]}$ contained in the first term on the right side of inequalities (1) and (2) is the cumulative interference power at a communication device n, and more specifically, it is the cumulative interference power from communication devices other than the communication device (communication device 3) as a calculation target this time to the communication device n. For example, $I_{Agg,1}(t)_{[dBm]}$ can include the interference power from the communication device 2 to the communication device 1.

The cumulative interference power $I_{Agg,n}(t)_{[dBm]}$ may be acquired from a cumulative interference power map, for example, by creating the cumulative interference power map in advance as indicated in Table 1 below. In the present embodiment, the cumulative interference power map is created in advance and the cumulative interference power is obtained from the cumulative interference power map. As an example, an example of the cumulative interference power map for the communication device 1 is illustrated below. Note that the initial value of each cumulative interference power is set to zero [mW].

[Table 1]

| Calculation reference point | Cumulative interference power $I_{Agg,1}(t)$ (mW) |
|---|---|
| $p_1(t_{start,1})$ | 0 |
| $p_1(t_{start,1} + t)$ | 0 |
| $p_1(t_{start,1} + 2t)$ | 0 |
| ... (omitted) | |
| $p_1(t_{start,2})$ | $I_{2\rightarrow1}(t_{start,2})$ (mW) |
| $p_1(t_{start,2} + t)$ | $I_{2\rightarrow1}(t_{start,2} + t)$ (mW) |

(continued)

| Calculation reference point | Cumulative interference power $I_{Agg,\,1}(t)$ (mW) |
|---|---|
| ... (omitted) | |
| P1 ($t_{End,\,2}$) | $I_{2\rightarrow1}(t_{End,\,2})$ (mW) |
| ... (omitted) | |
| $p_1(t_{End,\,1})$ | 0 |

Here, $I_{2\rightarrow1}(t)_{(mW)}$ is

[Math. 3]

$$I_{2\rightarrow1}(t)_{(mW)} = 10^{\frac{P_{MaxEIRP,\,2\,[dBm]} - G_{PeakTx,\,2\,[dB]} + G_{Tx,2}\left(p_2(t),\,p_1(t)\right)_{[dB]} - L_{Path}\left(p_2(t),\,p_1(t)\right)_{[dB]} + G_{Rx,\,1\,[dB]}}{10}}$$

.

The above table is a cumulative interference power map related to the communication device 1 when the communication device 2 starts operating. It is assumed that the cumulative interference power map $I_{Agg,\,2}(t)$ is similarly created for the operation route of the communication device 2. Note that the created cumulative interference power map is recorded in the operation plan/interference power management system 200, and can be used in approval processing of the operation plan/interference power management system 200. Furthermore, in creating the cumulative interference power map for the communication device n, the frequency management system 100 desirably sets a sampling time t and determines a calculation reference point on the operation route for each of $t_{start,\,n} + t$, $t_{start,\,n} + 2t$, ..., $t_{End,\,n}$. Note that, in the actual calculation, any fixed frame time may be set, and the interference power may be calculated (interference calculation). For example, when $t_{start,\,2} = 0$ and $t = 1$, the interference calculation at time $t_{start,\,2} = 0.5$ may be performed at $t_{start,\,2} + t$.

Next, whether or not the cumulative interference power to the communication device 3 by the communication device 1 and the communication device 2 satisfies the criterion of the communication device 3 virtually located at the point $p_m(t)$ is determined by the following inequality.
[Math. 4]

$$10^{\frac{I_{Thres,3\,[dBm]}}{10}} \geq \sum_{n=1}^{2} 10^{\frac{P_{MaxEIRP,\,n\,[dBm]} - G_{PeakTx,\,n\,[dB]} + G_{Tx,n}\left(p_n(t),\,p_m(t)\right)_{[dB]} - L_{Path}\left(p_n(t),\,p_m(t)\right)_{[dB]} + G_{Rx,\,3\,[dB]}}{10}} \tag{3}$$

In a case where the three inequalities (1) to (3) described above are satisfied for all times, the communication device 3 can use the same frequency channel as the communication device 1 and the communication device 2 at the point $p_m(t)$ (corresponding to any filled square in Fig. 20) (S24). Note that, in a case where some or all of the three inequalities described above are not satisfied at any time, the communication device 3 cannot use the same frequency channel as the communication device 1 and the communication device 2 at the point $p_m(t)$ (corresponding to any outlined square in Fig. 20) (S25). The point $p_m(t)$ may be a representative position such as the center of each cell, or a plurality of points $p_m(t)$ may be included in one cell. In the latter case, in a case where the aforementioned inequality is satisfied at all of the plurality of points $p_m(t)$, the cell is determined to be available. Note that, when the operation route or the operation route candidate of the communication device is determined, the operation route or the operation route candidate of the communication device does not necessarily need to be a route passing through the point $p_m(t)$ used in the above calculation, and may be a route passing through a cell determined to be available. Alternatively, the operation route or the operation route candidate of the communication device may be requested to be a route passing through the point $p_m(t)$ used in the above calculation.
The frequency availability map is generated on the basis of the results of steps S24 and S25 (S26), and the operation route candidate is acquired on the basis of the frequency availability map (S27). In a case where the frequency management system 100 allocates the same frequency channel as the communication device 1 and the communication device 2 to the communication device 3 and adjusts the operation plan on the basis of any one of the travel route candidates, the frequency management system 100 reflects (adds) the second term on the right side of Formulas (1) and (2) and the right side portion of Formula (3) on the cumulative interference power map in each of the communication devices 1, 2, and 3 to update the cumulative interference power map. The frequency management system 100 transmits the updated cumulative interference power map and the operation plan (including the acquired operation route candidate, the frequency channel, and the like) to the operation plan/interference power management system 200. Note that, in a case where a plurality of sets of the travel route candidates and the cumulative interference power map can be acquired, the cumulative interference power map and the travel plan may be transmitted to the travel plan/interference power management system 200 for each set, or one set may be selected and the corresponding cumulative interference power map and travel plan may be transmitted.

Note that, in this section, the processing content of the control unit 120 in a certain frequency management system 100 has been described. In another frequency management system 100, the cumulative interference power map may be updated on the basis of similar processing, and the adjusted operation plan or the like may be transmitted to the operation plan/interference power management system 200. Since the desired frequency channel, the travel route, the operation time, and the like may overlap in the adjusted operation plans transmitted from the plurality of frequency management systems 100, the operation plan/interference power management system 200 approves the adjusted travel plan in the present embodiment.

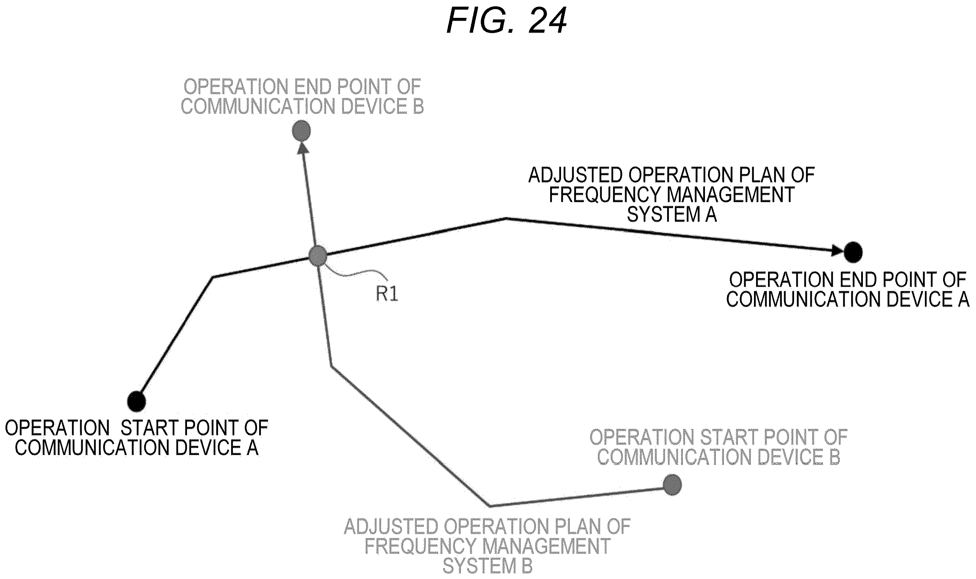

Fig. 24 illustrates an example in which the operation time and the operation route overlap between the adjusted operation plan of the communication device A generated by the frequency management system A and the adjusted operation plan of the communication device B generated by the frequency management system B. The region R corresponds to a region in which both operation routes overlap in the same operation time.

Therefore, each frequency management system 100 may acquire the adjusted operation plan and the cumulative interference power map information of another frequency management system 100 from the operation plan/interference power management system 200, and use the information when determining the radio parameters (frequency channel, maximum transmission allowable power, and the like) and adjusting the operation plan. In addition, the cumulative interference power map information may be represented by time t and $I_{Agg, n}(t)$ (mW) .

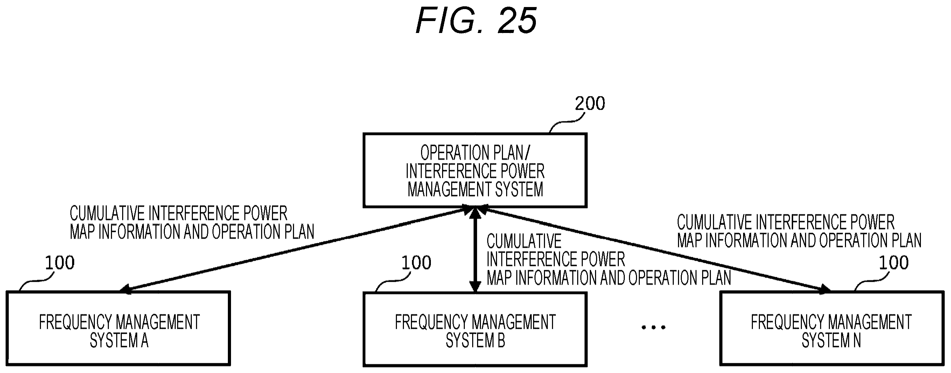

Fig. 25 illustrates an example in which the cumulative interference power map information and the adjusted operation plan of each frequency management system are exchanged via the operation plan/interference power management system 200. As the plurality of frequency management systems 100, frequency management systems 1 to N (N is an integer of 2 or more) are illustrated. The frequency management systems 1 to N provide the cumulative interference power map information and the adjusted operation plan of the own system to the operation plan/interference power management system 200, and acquire the cumulative interference power map information and the adjusted operation plan of another frequency management system from the operation plan/interference power management system 200.

For example, in a case of creating an adjusted operation plan (referred to as P1) of a certain communication device X, the frequency management system A refers to an adjusted operation plan (referred to as P2) already generated by the frequency management system B. Here, it is assumed that there is a communication device Y already flying ahead from the adjusted operation plan P2 using the same frequency channel as the desired frequency channel of the communication device X. In this case, the frequency management system A needs to add the interference power from the communication device Y in the adjusted operation plan P2 to the cumulative interference power in the communication device X. In addition, in a case where the operation routes of the communication device X and the communication device Y partially or entirely overlap at any time, the frequency management system A needs to adjust the operation plan in consideration of avoidance of a physical collision and generate the adjusted operation plan P1.

The above is the main idea in the present method. Hereinafter, an adjustment example of the radio parameters (frequency channel, maximum transmission allowable power, and the like) and the operation plan using this main idea will be described.

(3.2 Determination of radio parameters and adjustment of operation plan on basis of desired operation plan information)

This section describes determination of radio parameters (frequency channel, maximum transmission allowable power, and the like) based on the desired operation plan information and adjustment of the operation plan.

Here, in a case where there is already a radio system (primary system or protection target system) that primarily uses a part of the 5030-5091 MHz band, the frequency management system 100 performs interference calculation on the radio system and specifies an available frequency channel on the basis of whether or not an interference amount exceeds a limit value.

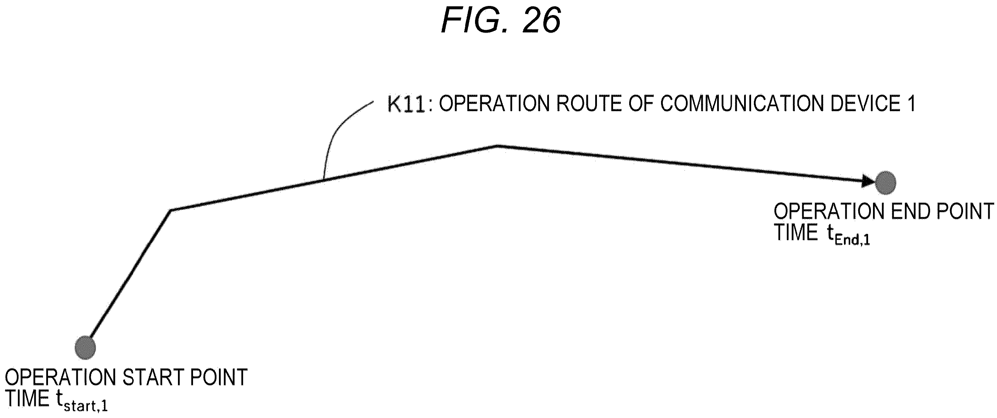

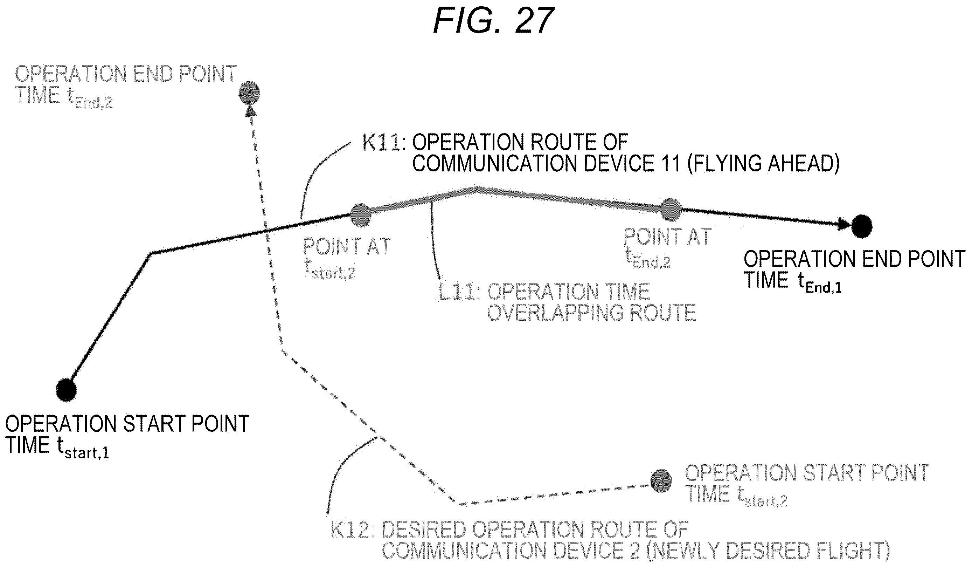

In addition, the frequency management system 100 may determine an available frequency channel of each flying communication device in consideration of interference outside the 5030-5091 MHz band. In this case, for the frequency channel, for example, the amount of interference (out-of-band radiation interference power) at a predetermined protection point due to out-of-band radiation from each flying communication device may be calculated, and the available frequency channel may be determined based on whether a cumulative value satisfies a limit value. The predetermined protection point may be an installation position of the wireless system described above. A specific description will be given below with reference to Figs. 26 and 27.

Now, it is assumed that the flying communication device user 1 applies to the frequency management system 100 for an operation plan for the communication device 1 as illustrated in Fig. 26. Fig. 26 illustrates an operation plan of the communication device 1 applied by the flying communication device user 1. The operation plan of the communication device 1 includes an operation route K11.

At this time, the frequency management system 100 calculates the amount of interference given from the communication device 1 to a predetermined protection point by out-of-band radiation at each point on the operation route, and in a case where the amount of interference does not exceed the limit value, the frequency management system 100 permits use of the frequency channel of the communication device 1. On the other hand, in a case where the amount of interference exceeds the limit value, the frequency management system 100 does not permit the use of the frequency channel.

Here, for example, it is assumed that the amount of interference due to out-of-band radiation from the communication device 1 satisfies the limit value, and the flying communication device user 2 newly applies to the frequency management system 100 for an operation plan for the communication device 2 as illustrated in Fig. 27. Fig. 27 illustrates an operation plan of the communication device 2 applied by the flying communication device user 2. The operation plan of the communication device 2 includes an operation route K12.

A route L11 is a route of the communication device 1 that flies at a time when the scheduled flight time of the communication device 2 overlaps with the flight time of the communication device 1, and is referred to as an operation time overlapping route L11 for convenience. First, as described above, the frequency management system 100 calculates the amount of interference given to the predetermined protection point by out-of-band radiation from the communication device 2 at each point on the operation route K12. In a case where the amount of interference exceeds the limit value even once on the operation route K12 of the communication device 2, the frequency management system 100 does not permit the communication device 2 to operate (use the frequency channel). Next, in a case where the amount of interference does not exceed the limit value, the frequency management system 100 calculates the amount of interference given to the predetermined protection point by out-of-band radiation from the communication device 1 and the communication device 2 in a period in which the communication device 1 moves along the operation time overlapping route L11, and determines whether the cumulative value exceeds the limit value. In a case where the cumulative value does not exceed the limit value and the communication device 1 and the communication device 2 use the same frequency channel, the frequency management system 100 performs the interference calculation between the communication device 1 and the communication device 2, and determines the radio parameters and the operation plan of the communication device 2 on the basis of the result of the interference calculation. On the other hand, in a case where the cumulative value exceeds the limit value, the frequency management system 100 does not permit the communication device 2 to operate (use the frequency channel). Thereafter, every time the flying communication device user 400 applies for a new operation plan, the frequency management system 100 determines whether the amount of interference with the predetermined protection point due to out-of-band radiation exceeds the limit value.

Furthermore, in the above description, only interference between flying communication devices, interference with a wireless system, and interference with a predetermined protection point are considered, but in a case where a communication device is operated using a ground base station or the like, a wireless parameter and an operation plan may be determined in consideration of interference to the base station and interference from the base station. Note that, also in this case, the interference calculation may use the method described in Section 3.1.

(3.2.1 Case Where Route Information Is Departure and Arrival Point Information)

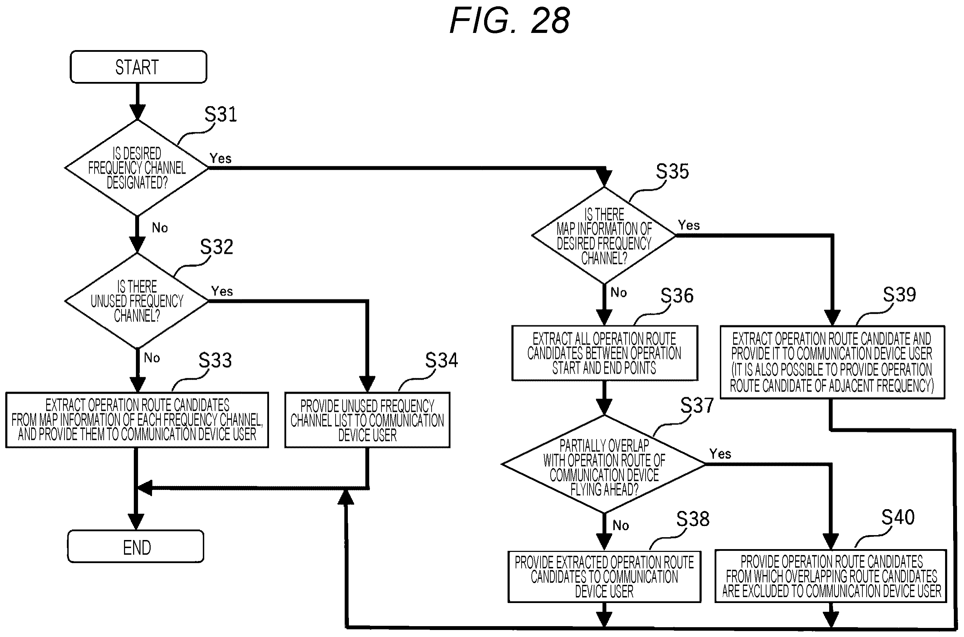

A case where the route information in the desired operation plan information is the departure and arrival point information will be described. In this case, since only the operation start point and the operation end point of the flying communication device are designated, the frequency management system 100 extracts operation route candidates using the frequency availability map. The frequency management system 100 may provide the flying communication device user 400 with information of the extracted operation route candidates, acquire an operation route candidate desired by the flying communication device user 400 or an operation plan approval request including the operation route candidate, and generate an adjusted travel plan according to the operation route candidate. Alternatively, a configuration may be employed in which the frequency management system 100 selects an operation route from the extracted operation route candidates, and the flying communication device user 400 is not asked which operation route among the extracted operation route candidates is desired. Hereinafter, a detailed operation will be described with reference to Fig. 28.

Fig. 28 is a flowchart of an example of the operation of determining the operation route candidate in a case where the route information is the departure and arrival point information.

The frequency management system 100 determines whether or not the desired frequency channel is designated (S31). In a case where the desired frequency channel is designated, the frequency management system 100 checks whether there is a frequency availability map in a case where the frequency channel is used (S35). In a case where there is a frequency availability map, it means that there is a flying communication device already flying ahead using the frequency channel. The frequency management system 100 extracts operation route candidates from the frequency availability map by the method described in Section 3.1, and provides the flying communication device user 400 with information of the operation route information (S33). Furthermore, at this time, in addition to the operation route candidate of the desired frequency channel, an operation route candidate in the case of using the adjacent frequency channel may also be provided. In order to create the frequency availability map for the adjacent frequency channel, it is only required to acquire adjacent channel leakage power ratio information from a spectrum mask or the like, set the transmission power of the communication device so as to satisfy the power ratio, and then perform the interference calculation described in Section 3.1. Note that, at the time of interference calculation, factors that affect the interference power, such as the influence of Doppler shift, may be considered in consideration of the moving speed and the number of communication devices in operation, the bandwidth of the frequency channel, and the like.

In a case where there is no frequency availability map in the case of using the desired frequency channel, it means that there is no flying communication device flying ahead using the frequency channel. In this case, the frequency management system 100 extracts all routes that can be operated between the operation start point and the operation end point as operation route candidates (S36). Here, it is determined whether the extracted operation route candidates include an operation route candidate that partially or entirely overlaps with the operation route of the communication device flying ahead in another frequency channel (S37). In a case where there is no overlapping operation route candidate, information of the extracted operation route candidates is provided to the communication device user (S38). In a case where there is an overlapping operation route candidate, a communication device scheduled to be newly operated may physically collide with a communication device flying ahead (hereinafter, physical collision). Thus, the frequency management system 100 excludes such an operation route from the candidates and provides the flying communication device user 400 with operation route candidates remaining after the exclusion (S37 and S40). Even if there is an overlapping operation route candidate, in a case where the flight time in an overlapping operation route portion is different and there is no possibility of collision, such an operation route candidate may be treated as a non-overlapping operation route candidate.

In a case where it is determined in step S31 described above that the desired frequency channel is not designated, the frequency management system 100 provides the flying communication device user 400 with a list of unused frequency channels in consideration of avoidance of physical collision between the communication devices (S32 and S34). In a case where there is no unused frequency channel, the frequency management system 100 refers to the frequency availability map of each frequency channel used by at least one or more communication devices, and extracts an operation route candidate from each map (S33). Thereafter, information of operation route candidates is provided to the flying communication device user 400 (S33). The information of the operation route candidates to be provided to the flying communication device user 400 may be associated with information of available frequency channels for each operation route candidate.

(3.2.2 Case where route information is complete route information)

Next, a case where the route information in the desired operation plan information is complete route information will be described. In this case, the operation route of the flying communication device is completely designated.

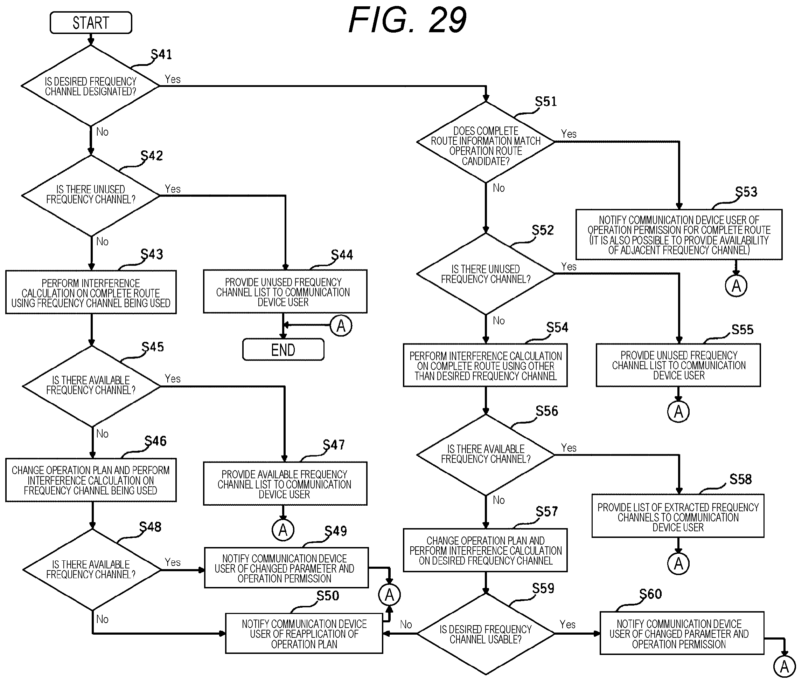

Fig. 29 is a flowchart of an example of the operation in a case where the route information is the complete route information.

First, the frequency management system 100 determines whether a desired frequency channel is designated (S41), and if designated, determines whether the complete route information matches an operation route candidate in the frequency availability map information (S51). In a case where they match, the frequency management system 100 notifies the flying communication device user 400 of the operation permission for the complete route after approval of the operation route/interference power management system 200 (S53). At this time, the availability information of the adjacent frequency channel in the complete route may be simultaneously provided.

On the other hand, in a case where the complete route information does not match the operation route candidate, the flying communication device cannot use the desired frequency channel on the route described in the complete route information. Thus, the frequency management system 100 checks whether there is an unused frequency channel (S52). In a case where there is an unused frequency channel, the frequency management system 100 transmits a list of the unused frequency channels to the flying communication device user 400 after approval of the operation route/interference power management system 200 (S55). The flying communication device user 400 can select and use the frequency channel described in the list of unused frequency channels on the route described in the complete route information.

On the other hand, in a case where there is no unused frequency channel, the frequency management system 100 extracts a frequency channel the frequency channel being usable in a channel other than the desired frequency channel on the route described in the complete route information by interference calculation (S54), and transmits a list of the frequency channels to the flying communication device user 400 after approval of the operation route/interference power management system 200 (S56 and S58). In a case where there is no available frequency channel even after the processing is performed, the frequency management system 100 changes the operation time, the flight speed, and the like of the flying communication device, and performs interference calculation again in the desired frequency channel (S57). As a result of the interference calculation, it is determined whether the desired frequency channel can be used, and if the desired frequency channel can be used, the frequency management system 100 transmits, after approval of the operation route/interference power management system 200, an operation permission together with the changed parameter information to the flying communication device user 400 (S60). The flying communication device user 400 may refer to the changed parameter, and may modify the operation plan and apply again in a case where the operation is not possible with the parameter. In a case where the desired frequency channel cannot be used as a result of the interference calculation, the frequency management system 100 notifies the flying communication device user 400 that the operation plan is corrected and reapplication is to be performed (S50). In addition to the notification of reapplication or instead of the notification of reapplication, the flying communication device user 400 may be notified of information indicating that the operation plan currently being applied for is not allowed.

In a case where it is determined in step S41 that the desired frequency channel is not designated, the frequency management system 100 checks whether there is an unused frequency channel (S42). In a case where there is an unused frequency channel, a list of unused frequency channels is provided to the flying communication device user 400 after approval of the operation route/interference power management system 200 (S44). The flying communication device user 400 selects any frequency channel from the received list of frequency channels, and operates a route described in the complete route information.

On the other hand, in a case where there is no unused frequency channel, the frequency management system 100 extracts available frequency channels on the route described in the complete route information among the frequency channels being used by other communication devices by interference calculation (S43), and provides the flying communication device user 400 with a list of the frequency channels after approval of the operation route/interference power management system 200 (S45 and S47). In a case where there is no available frequency channel, the frequency management system 100 changes the operation time, the flight speed, and the like of the flying communication device, and performs interference calculation again in the frequency channel being used by another communication device (S46). In a case where there is an available frequency channel as a result of the interference calculation again, the frequency management system 100 transmits the changed parameter information, a list of available frequency channels, and an operation permission to the flying communication device user 400 after approval of the operation route/interference power management system 200 (S49).

The flying communication device user 400 may refer to the changed parameter, and may modify the operation plan and apply again in a case where the operation is not possible with the parameter. In a case where there is no available frequency channel as a result of the interference calculation again, the frequency management system 100 notifies the flying communication device user 400 that the operation plan is modified and reapplication is to be performed (S50). In addition to the notification of reapplication or instead of the notification of reapplication, the flying communication device user 400 may be notified of information indicating that the operation plan currently being applied for is not allowed.

(3.2.3 Desired license area)

In the above example, the frequency management system 100 performs permission determination of frequency use on the operation route of each flying communication device, but the permission determination of the frequency use may be performed for each geographical area (hereinafter, the license area) on the basis of the desired license area information. Similarly, the operation plan/interference power management system 200 to be described later may determine approval of an operation plan for each geographical area (hereinafter, the license area) on the basis of the desired license area information.

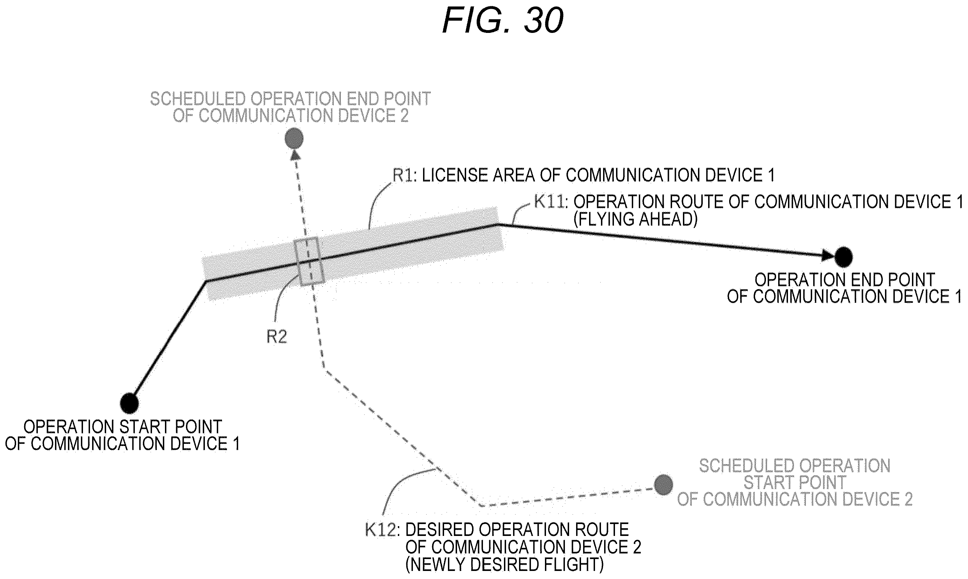

Fig. 30 is an explanatory diagram of an operation of the frequency management system 100 in a case where permission determination of frequency use is performed for each license area. Fig. 30 illustrates an example in which an operation route K12 of a certain flying communication device (communication device 2) overlaps with a license area R1 of another flying communication device (communication device 1). Although Fig. 30 illustrates an example in which the license area R1 is a part of the operation route, the present invention is not limited thereto. The license area itself may be treated as an operation route, and the operation plan may be configured so that the communication device 1 can freely move, emit radio waves, or provide a service within an approved time range as long as it is within the approved license area.

In consideration of the above matters, the frequency management system 100 may perform, for example, the following processing on any communication device such as the communication device 1 or the communication device 2.

· Frequency usage right on the operation route K12 of the communication device 2 and frequency usage right in a license area portion R2 through which the operation route K12 passes in the license area R1 of the communication device 1 are given to the communication device 2 on the basis of interference calculation. Thus, the communication device 2 can use the frequency also in the license area R1 of the communication device 1, and the frequency use efficiency can be improved. Note that, in any case, the method of Section 3.1 described above can be used for interference calculation.
· In the license area portion R2 of the other communication device 1, the communication device 2 may use a multi-purpose channel (Non Patent Document 2).

Furthermore, in the above description, only interference calculation between the flying communication devices is considered, but in a case where the flying communication device is operated using a ground base station or the like, a frequency channel may be allocated in consideration of interference to the base station and interference from the base station. Note that the interference calculation may use the technique described in this section.

Furthermore, an example in which all the communication devices of the communication device 1 to the communication device 3 are movable has been described so far, but at least one of these may be a communication device that does not move. In this case, the cumulative interference power map related to the communication device that does not move may be calculated on the assumption that the parameter related to the position does not change even if the time t is different. In addition, information indicating whether or not the communication device is movable may be transmitted to the frequency management system 100 in advance. The frequency management system 100 may change the calculation method on the basis of the information indicating whether or not the movement is possible, or may perform the calculation a plurality of times using the same position information parameter without changing the calculation method.

In a case where it is difficult to determine the position of the communication device 1 in a region set as the license area of the communication device 1, the calculation may be performed assuming that the communication device 1 is present at all times and in the entire region for the time and the region in which the license area is set in the cumulative interference power map.

(3.3 Limiting processing of frequency channel usage right)

Limiting processing of the frequency channel usage right will be described. In a case where the number of flying communication device users 400 who desire to use a certain frequency channel increases, there is a possibility that the same communication device user will exclusively use the frequency channel for a long period of time. Therefore, the frequency management system 100 may provide at least one constraint of the following two patterns for each frequency channel, for example.

· A maximum usable period of a frequency channel is preset in one operation period. In a case where the flying communication device user 400 applies for an operation time exceeding the period, the frequency management system 100 does not permit the communication device user to operate.
· A limit is set to the number of times of frequency channel use application in a certain period. In a case where the number of times of transmission of the operation plan approval request of a certain flying communication device user 400 exceeds the number of times in any frequency channel, the frequency management system 100 does not permit the operation of the communication device user.

The former is a constraint on the use period of the frequency channel, and the latter is a constraint on the use frequency of the frequency channel. Note that, in a case where such a constraint is not provided, the frequency management system 100 performs the interference calculation described in Section 3.1 and determines the radio parameters and the operation plan of each flying communication device user 400.

<4 Processing content in control unit 220 of operation plan/interference power management system 200>

Processing content in the control unit 220 of the operation plan/interference power management system 200 will be described. The control unit 220 of the operation plan/interference power management system 200 performs approval processing of the adjusted operation plan on the basis of the adjusted operation plan and the cumulative interference power map received by the communication unit 230 from each frequency management system 100. Hereinafter, the processing of the operation plan/interference power management system 200 and the operation of the communication device user 400 according to the result of the processing will be described in detail with reference to Fig. 30.

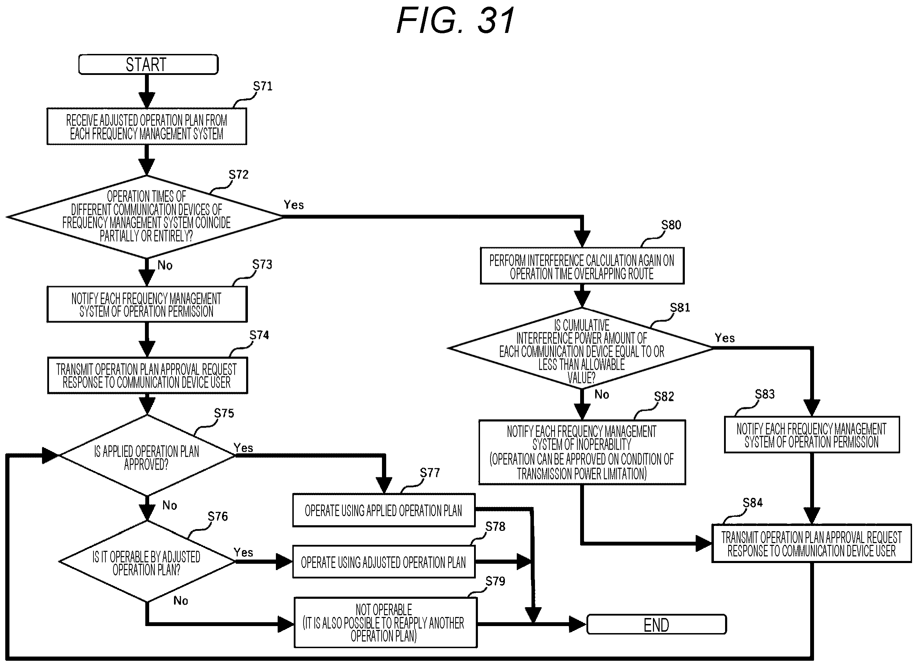

Fig. 31 is a flowchart of an example of the processing of the operation plan/interference power management system 200 and the operation of the communication device user 400 according to the result of the processing.

In the operation plan/interference power management system 200, the communication unit 230 receives the adjusted operation plan and the cumulative interference power map from each frequency management system 100 (S71). The adjusted operation plan desirably includes at least the following information.

· Operation plan approval request identification ID

· Operation plan approval request application date and time (UNIX time, UTC time, or the like)
· Flying communication device user identifier
· Flying communication device identifier

- Device serial number
- Device authentication number (identifier indicating passing of device authentication such as FCC ID)

· Adjusted operation plan information

- Adjusted operation route information

    --- Complete route information (latitude, longitude, altitude, and the like of each point on route)
    --- Departure and arrival point information (latitude, longitude, altitude, and the like)
    --- Desired license area information (latitude, longitude, altitude, and the like)
    --- Desired passing point information (latitude, longitude, altitude, and the like)

- Designated operation time information

    --- Operation start time (UNIX time, UTC time, or the like)
    --- Operation end time (UNIX time, UTC time, or the like)

- Radio parameters

    --- Frequency channel (center frequency + channel bandwidth, combination of lower limit and upper limit frequency, predefined channel identifier, or the like)
    --- Transmission power (EIRP or the like)

· Flying communication device function information

- Flight speed (normal speed, maximum speed, minimum speed, or the like)
- Operable frequency range
- Maximum transmission power (EIRP or the like)
- Antenna information (antenna gain, antenna type, and the like)
- Noise power
- Interference protection criterion information (SIR, SINR, INR, or the like)

The operation plan/interference power management system 200 refers to the cumulative interference power map and evaluates the cumulative interference power. For example, it is assumed that the cumulative interference power map of each of the communication device 1 and the communication device 2 is transmitted from the frequency management system 1, the cumulative interference power map of each of the communication device 3 and the communication device 4 is transmitted from the frequency management system 2, and the cumulative interference power map has already been recorded. Table 2 illustrates an example of the cumulative interference power map of the communication device 1, and Table 3 illustrates an example of the cumulative interference power map of the communication device 3. Similar cumulative interference power maps have been recorded for the communication device 2 and the communication device 4. Furthermore, it is assumed that the communication devices 1 to 4 use the same frequency channel.

[Table 2]

| Cumulative interference power map of communication device 1 in frequency management system 1 | |
|---|---|
| Calculation reference point | Cumulative interference power $I_{Agg, 1}$ (t) (mW) |
| $p_1$ ($t_{start, 1}$) | 0 |
| $p_1$ ($t_{start, 1} + t$) | 0 |
| $p_1$ ($t_{start, 1} + 2t$) | 0 |
| ... (omitted) | |
| $p_1$ ($t_{start, 2}$) | $I_{2 \to 1}$ ($t_{start, 2}$) (mW) |

(continued)

| Cumulative interference power map of communication device 1 in frequency management system 1 | |
|---|---|
| Calculation reference point | Cumulative interference power $I_{Agg,1}(t)$ (mW) |
| $p_1(t_{start,2}+t)$ | $I_{2\rightarrow1}(t_{start,2}+t)$ (mW) |
| ... (omitted) | |
| $p_1(t_{End,2})$ | $I_{2\rightarrow1}(t_{End,2})$ (mW) |
| ... (omitted) | |
| $p_1(t_{End,1})$ | 0 |

[Table 3]

| Cumulative interference power map of communication device 3 in frequency management system 2 | |
|---|---|
| Calculation reference point | Cumulative interference power $I_{Agg,3}(t)$ (mW) |
| $p_3(t_{start,3})$ | 0 |
| $p_3(t_{start,3}+t)$ | 0 |
| $p_3(t_{start,3}+2t)$ | 0 |
| ... (omitted) | |
| $p_3(t_{start,4})$ | $I_{4\rightarrow3}(t_{start,4})$ (mW) |
| $p_1(t_{start,4}+t)$ | $I_{4\rightarrow3}(t_{start,4}+t)$ (mW) |
| ... (omitted) | |
| $p_1(t_{End,4})$ | $I_{4\rightarrow3}(t_{End,4})$ (mW) |
| ... (omitted) | |
| $p_1(t_{End,3})$ | 0 |

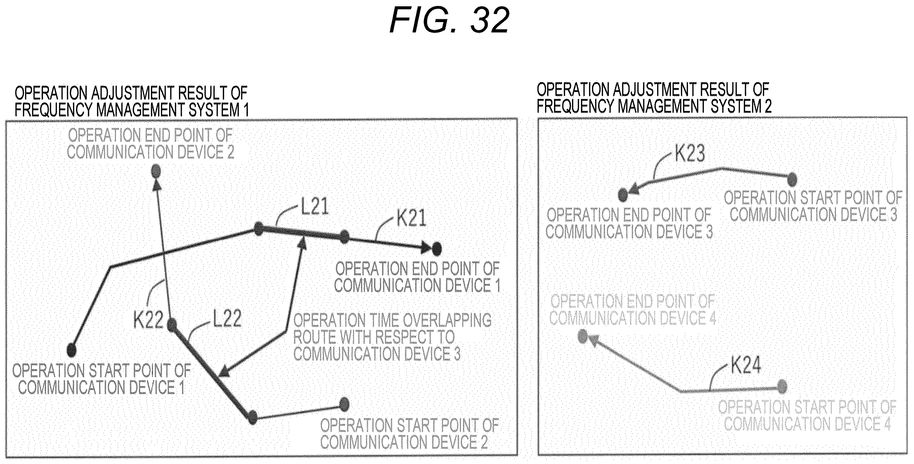

It is determined whether the operation time of the communication device 1 or the communication device 2 coincides with a part or all of the operation time of the communication device 3 or the communication device 4 (S72). A specific example will be described with reference to Fig. 32. Fig. 32 illustrates an operation adjustment result (left drawing) of the frequency management system 1 and an operation adjustment result (right drawing) of the frequency management system 2. As illustrated in the left diagram of Fig. 32, when the frequency management system 1 permits the communication device 1 and the communication device 2 to operate on the operation route K21 with respect to K22, the frequency management system 2 permits the communication device 3 to operate on the operation route K23 as illustrated in the right drawing. It is assumed that the frequency management system 2 permits the communication device 4 to operate on the operation route K24. It is assumed that the operation hours of the communication devices 3 and 4 are a part of the operation time of the communication device 1 and also a part of the operation time of the communication device 2. Interference occurs from the communication device 3 to the communication device 1 in a route portion (operation time overlapping route) L21 of the operation route K21 of the communication device 1 whose operation time overlaps with that of the communication device 3. Furthermore, interference occurs from the communication device 3 to the communication device 2 in a route portion (operation time overlapping route) L22 of the operation route K22 of the communication device 2 whose operation time overlaps with that of the communication device 3. Similarly, interference from the communication device 1 and the communication device 2 to the communication device 3 also occurs in all of the operation routes K23 of the communication device 3. Due to the interference, the cumulative interference power may exceed an allowable value in some or all of the communication devices 1 to 3. Although the left drawing illustrates the route portions L21 and L22 whose operation times overlap with those of the communication device 3 for the communication devices 1 and 2, there is also a route portion (not illustrated) whose operation times overlap with that of the communication device 4, and there is a possibility that the cumulative interference power exceeds the allowable value in some or all of the communication devices 1, 2, and 4, similarly to the communication device 3.

Thus, the operation plan/interference power management system 200 refers to the cumulative interference power maps of the communication device 1 and the communication device 2, adds the interference amount from the communication device 3 to the cumulative interference power of the communication device 1 and the communication device 2 on the routes L21 and L22 overlapping with the operation time of the communication device 3, and updates the cumulative interference power maps of the communication devices 1 and 2 (S80). Similarly, the interference amount from the communication device 1 and the communication device 2 is added to the cumulative interference power of the communication device 3, and the cumulative interference power map of the communication device 3 is updated (S80). Furthermore, for the communication device 4, similarly, the interference amount from the communication device 4 is added to the cumulative interference power in the communication device 1 and the communication device 2, and the cumulative interference power maps of the communication devices 1 and 2 are updated (S80). Similarly, the interference amount from the communication device 1 and the communication device 2 is added to the cumulative interference power of the communication device 4, and the cumulative interference power map of the communication device 4 is updated (S80).

After the update, in a case where the cumulative interference power in all the communication devices satisfies the allowable value, the operation plan/interference power management system 200 notifies the frequency management system 1 of approval of the adjusted operation plans of the communication devices 1 and 2, and notifies the frequency management system 2 of approval of the adjusted operation plans of the communication devices 3 and 4 (S81 and S83). The frequency management systems 1 and 2 receive the approval (permission message) of the operation plan notified from the operation plan/interference power management system 200 by the second communication unit 132 and record the approval in the recording unit 110. On the other hand, in at least one communication device, in a case where the cumulative interference power exceeds the allowable value, the operation plan/interference power management system 200 notifies the frequency management systems 1 and 2 of rejection of the adjusted operation plan. Alternatively, the frequency management systems 1 and 2 may be notified of the operation plan approval (permission message) on condition that an interference budget is distributed (= transmission power limitation is performed) between the communication devices involved in the excess on the basis of the allowable value excess amount (S82). For example, in a case where the cumulative interference power of the communication device 3 exceeds an allowable value, the cumulative interference power of the communication device 3 is set to be equal to or less than the allowable value by distributing the interference budget between the communication devices 1 and 2 (= performing transmission power limitation).

The frequency management systems 1 and 2 receive the permission message notified from the operation plan/interference power management system 200 by the second communication unit 132 and record the permission message in the recording unit 110 (S84). Then, the frequency management systems 1 and 2 notify the respective flying communication device users (referred to as flying communication device users 1 and 2) of a response to the operation plan approval request via the first communication unit 131 (S84).

In a case where the applied operation plan is approved, the flying communication device users 1 and 2 set the operation plan information desired in the operation plan approval request to the flying communication device (S75 and S77). On the other hand, if the received operation plan is different from the applied operation plan, the flying communication device user 400 determines whether the operation plan is appropriate, and in a case where it is operable, the flying communication device user 400 sets the operation plan information described in the adjusted operation plan to the flying communication device (S75, S76, and S78). In a case where the flying communication device user 400 does not wish to operate in the adjusted operation plan, the flying communication device user 400 may determine that flight is disabled or modify the operation plan and apply again (S79).

In a case where it is determined in step S72 described above that the operation time of the communication device 1 or the communication device 2 does not coincide with a part or all of the operation time of the communication device 3 or the communication device 4, the operation plan/interference power management system 200 notifies the frequency management system 1 of approval (permission message) of the adjusted operation plans of the communication devices 1 and 2, and notifies the frequency management system 2 of approval of the adjusted operation plans of the communication devices 3 and 4 (S73). The frequency management systems 1 and 2 receive the permission message notified from the operation plan/interference power management system 200 by the second communication unit 132 and record the permission message in the recording unit 110 (S74). Then, the frequency management systems 1 and 2 notify each of the flying communication device users (the flying communication device users 1 and 2) of a response to the operation plan approval request via the first communication unit 131 (S74). The flying communication device users 1 and 2 set the operation plan information desired in the operation plan approval request to the flying communication device (S75 and S77).

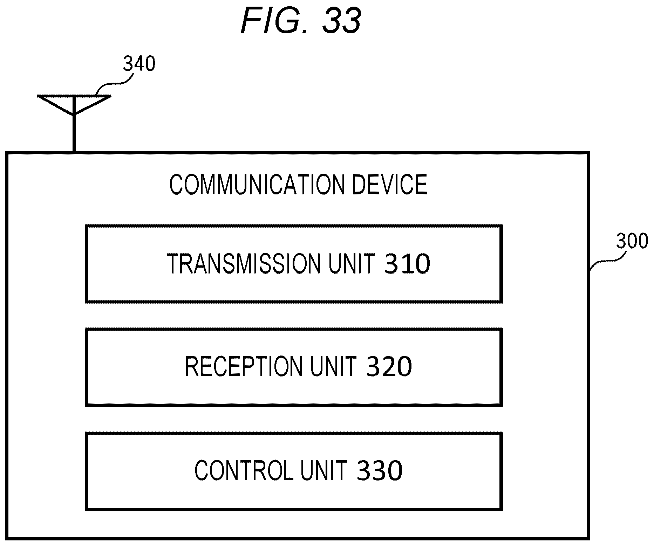

Fig. 33 is a block diagram of a schematic configuration of a communication device 300 according to the present disclosure. A function of the communication device user 400 may be further included in the communication device 300. The communication device 300 is a communication device capable of flying (moving) in a target space where another communication device capable of emitting a radio wave exists. The communication device 300 includes a transmission unit 310, a reception unit 320, a control unit 330, and one or more antennas 340. The antenna 340 emits a radio wave into the target space. The transmission unit 310 transmits request information regarding a flight (movement) including a departure point and a departure time of the communication device 300 and an arrival point and an arrival time of the communication device 300 in the target space to a communication control device that generates an operation plan (movement plan) including an operation route (movement route) of the communication device 300. The communication control device includes at least one of the frequency management system 100 and the operation plan/interference power management system 200. The reception unit 320 receives information regarding an operation plan (movement plan) generated by the communication control device in accordance with the request information. The control unit 330 controls the flight of the communication device 300 in the target space on the basis of the operation plan. The cumulative interference power received by the communication device 300 from another communication device 300 according to the operation plan generated by the communication control device is equal to or less than the allowable value. Cumulative interference power that the communication device 300 or the like gives to another communication device 300 is also equal to or less than the allowable value.

As described above, in the present embodiment, it has been described that the frequency management system 100 can acquire the cumulative interference power and the information of the operation plan of another frequency management system 100 and adjust the operation plan in the own system, but in a case where another frequency management system 100 is operating in parallel, the acquired information may not be the latest. Also in this case, the operation plan/interference power management system 200 performs the operation illustrated in Fig. 31, so that it is possible to approve the operation plan of each communication device in which power interference, collision, and the like between the communication devices belonging to the plurality of different frequency management systems 100 is prevented.

In addition, the frequency management system 100 may perform interference calculation or the like only for a communication device belonging to the own system without considering the cumulative interference power and the operation plan of another frequency management system 100, and the operation plan/interference power management system 200 may adjust all of suppression of interference power, collision prevention, and the like with another frequency management system 100.

In a situation where only one frequency management system 100 exists, the operation plan/interference power management system 200 can be omitted. In addition, in a case where there are two or more frequency management systems 100, any one of the frequency management systems 100 may have the function of the operation plan/interference power management system 200.

Note that, in the present disclosure, the cumulative interference power map information and the operation plan of each frequency management system 100 are aggregated in the operation plan/interference power management system 200, but the frequency management system 100 may transmit its own cumulative interference power map information and operation plan to another frequency management system 100. In this case, each frequency management system 100 may use the cumulative interference power map information and the operation plan transmitted from another frequency management system 100 to adjust the radio parameters and the operation plan between the flying communication devices.

Furthermore, in the present disclosure, an example in which all of the communication devices 1 to 4 are movable communication devices has been described, but at least one of the communication devices 1 to 4 may be a communication device that does not move. In addition, the communication device may transmit information indicating whether or not the communication device is movable to the frequency management system 100 in advance. The frequency management system 100 may change the calculation method on the basis of the information indicating whether or not the movement is possible, or may perform the calculation a plurality of times using the same position information parameter without changing the calculation method.

As described above, according to the present embodiment, by adjusting the operation route of each communication device together with allocation of the frequency channel to each communication device, it is possible to increase the opportunity to share the same frequency channel with a large number of communication devices without causing interference among the communication devices. In the conventional DSA technology, the frequency management system 100 allocates only the radio parameters such as the allowable maximum transmission power and the use frequency channel to each communication device on the basis of the interference calculation, and does not adjust the operation route. Therefore, if the operation route is changed, an available frequency channel cannot be allocated, and the frequency use efficiency is suppressed. On the other hand, in the present embodiment, since the same frequency channel can be allocated to more communication devices by adjusting the operation route of the communication device, the frequency channel use opportunity increases, and the frequency use efficiency can be improved.

Note that the embodiment described above represents an example for embodying the present disclosure, and the present disclosure can be implemented in various other modes. For example, various modifications, substitutions, omissions, or combinations thereof are possible without departing from the gist of the present disclosure. Such modifications, substitutions, omissions, and the like are also included in the scope of the present disclosure, and are similarly included in the inventions disclosed in the claims and the equivalents thereof.

Furthermore, the effects of the present disclosure described in the present specification are merely an example, and other effects may be achieved.

The present embodiment can also have the following configurations.

[Appendix]

[Item 1]

A communication control device that controls a plurality of movable communication devices, the communication control device including:

a control unit that acquires each piece of request information regarding movement of the communication devices, and determines a movement route of each of the communication devices on the basis of the request information so that a cumulative interference power received by each of the communication devices from another of the communication devices becomes equal to or less than an allowable value.

[Item 2]

The communication control device according to item 1, in which

the request information includes a departure point and an arrival point of the communication device, and
the control unit generates one or more candidates for the movement route for moving from the departure point to the arrival point, and selects the movement route from the one or more candidates.

[Item 3]

The communication control device according to item 1 or 2, in which

the request information includes a desired movement route used for movement of the communication device from a departure point to an arrival point, and
the control unit determines whether or not it is possible to permit the desired movement route as the movement route of the communication device on the basis of whether or not the cumulative interference power received by the communication device in a case where the communication device moves along the desired movement route is equal to or less than the allowable value.

[Item 4]

The communication control device according to any one of items 1 to 3, in which

the request information includes a departure time and an arrival time of the communication device,
the request information includes a departure point and an arrival point of the communication device, and
the control unit calculates the cumulative interference power for each of certain periods of time from the departure time to the arrival time for a plurality of unit regions obtained by dividing a target space in which the communication device is movable, sets the unit region in which all the cumulative interference powers for the certain periods of time are equal to or less than an allowable value as a first region, and determines a route passing through the first region from when the communication device departs from the departure point to when the communication device arrives at the arrival point as the movement route of the communication device.

[Item 5]

The communication control device according to item 4, in which
the control unit generates a frequency availability map indicating the unit region that is continuously the first region from the departure time to the arrival time among the plurality of unit regions, and determines a route passing through the first region until the communication device arrives at the arrival point after the communication device departs from the departure point on the basis of the frequency availability map.

[Item 6]

The communication control device according to item 4 or 5, in which the control unit generates a frequency availability map indicating the unit region that is the first region among the plurality of unit regions for each time in a period from the departure time to the arrival time, and determines a route passing through the first region from when the communication device departs from the departure point to when the communication device arrives at the arrival point on the basis of the frequency availability map for the each time.

[Item 7]

The communication control device according to any one of items 4 to 6, in which
in a case where there is no route passing through the first region from when the communication device departs from the departure point to when the communication device arrives at the arrival point, the control unit reduces a size of the unit region and redivides the target space.

[Item 8]

The communication control device according to item 2, in which the control unit selects, as the movement route of the communication device, the candidate that does not overlap with the movement route of another of the communication devices during a movement time of the another of the communication devices among the one or more candidates.

[Item 9]

The communication control device according to any one of items 1 to 8, in which

the request information regarding a plurality of the communication devices includes information regarding a frequency channel that the communication device desires to use, and
the frequency channels of the plurality of the communication devices at least partially overlap each other.

[Item 10]

The communication control device according to any one of items 1 to 9, in which

the communication device is a flying communication device, and
the movement route is a flight route of the flying communication device in a three-dimensional space.

[Item 11]

A communication device capable of moving in a target space in which another communication device capable of emitting a radio wave exists, the communication device including:

a transmission unit that transmits request information regarding movement including a departure point and a departure time of the communication device and an arrival point and an arrival time of the communication device in the target space to a communication control device that generates a movement plan including a movement route of the communication device;
a reception unit that receives information regarding the movement plan generated by the communication control device according to the request information; and
a control unit that controls movement of the communication device in the target space on the basis of the movement plan in which a cumulative interference power received by the communication device from the another communication device is equal to or less than an allowable value.

[Item 12]

A communication control method for controlling a plurality of movable communication devices, the communication control method including:

acquiring each piece of request information regarding movement of the communication devices; and
determining a movement route of each of the communication devices on the basis of the request information so that a cumulative interference power received by each of the communication devices from another of the communication devices becomes equal to or less than an allowable value.

[Item 13]

A communication method including:

transmitting request information regarding movement including a departure point and a departure time of a communication device capable of moving in a target space in which another communication device capable of emitting a radio wave exists and an arrival point and an arrival time of the communication device to a communication control device that generates a movement plan including a movement route of the communication device;

receiving information regarding the movement plan generated by the communication control device according to the request information; and

controlling movement in the target space on the basis of the movement plan, in which a cumulative interference power received by the communication device from the another communication device is equal to or less than an allowable value.

REFERENCE SIGNS LIST

100 Frequency management system
110 Recording unit
120 Control unit
131 First communication unit
132 Second communication unit
133 Third communication unit
200 Interference power management system
210 Recording unit
220 Control unit
230 Communication unit
300 Flying communication device (communication device and movement device)
400 Flying communication device user (communication device user)

**Claims**

1. A communication control device that controls a plurality of movable communication devices, the communication control device comprising:

   a control unit that acquires each piece of request information regarding movement of the communication devices, and
   determines a movement route of each of the communication devices on a basis of the request information so that a cumulative interference power received by each of the communication devices from another of the communication devices becomes equal to or less than an allowable value.

2. The communication control device according to claim 1, wherein

   the request information includes a departure point and an arrival point of the communication device, and
   the control unit generates one or more candidates for the movement route for moving from the departure point to the arrival point, and selects the movement route from the one or more candidates.

3. The communication control device according to claim 1, wherein

   the request information includes a desired movement route used for movement of the communication device from a departure point to an arrival point, and
   the control unit determines whether or not it is possible to permit the desired movement route as the movement route of the communication device on a basis of whether or not the cumulative interference power received by the communication device in a case where the communication device moves along the desired movement route is equal to or less than the allowable value.

4. The communication control device according to claim 1, wherein

   the request information includes a departure time and an arrival time of the communication device,
   the request information includes a departure point and an arrival point of the communication device, and
   the control unit calculates the cumulative interference power for each of certain periods of time from the departure time to the arrival time for a plurality of unit regions obtained by dividing a target space in which the communication device is movable, sets the unit region in which all the cumulative interference powers for the certain periods of time are equal to or less than an allowable value as a first region, and determines a route passing through the first region from when the communication device departs from the departure point to when the communication device arrives at the arrival point as the movement route of the communication device.

5. The communication control device according to claim 4, wherein
the control unit generates a frequency availability map indicating the unit region that is continuously the first region from the departure time to the arrival time among the plurality of unit regions, and determines a route passing through the first region until the communication device arrives at the arrival point after the communication device departs from the departure point on a basis of the frequency availability map.

6. The communication control device according to claim 4, wherein
the control unit generates a frequency availability map indicating the unit region that is the first region among the plurality of unit regions for each time in a period from the departure time to the arrival time, and determines a route passing through the first region from when the communication device departs from the departure point to when the communication device arrives at the arrival point on a basis of the frequency availability map for the each time.

7. The communication control device according to claim 4, wherein
in a case where there is no route passing through the first region from when the communication device departs from the departure point to when the communication device arrives at the arrival point, the control unit reduces a size of the unit region and redivides the target space.

8. The communication control device according to claim 2, wherein
the control unit selects, as the movement route of the communication device, the candidate that does not overlap with the movement route of another of the communication devices during a movement time of the another of the communication devices among the one or more candidates.

9. The communication control device according to claim 1, wherein

   the request information regarding a plurality of the communication devices includes information regarding a frequency channel that the communication device desires to use, and
   the frequency channels of the plurality of the communication devices at least partially overlap each other.

10. The communication control device according to claim 1, wherein

    the communication device is a flying communication device, and
    the movement route is a flight route of the flying communication device in a three-dimensional space.

11. A communication device capable of moving in a target space in which another communication device capable of emitting a radio wave exists, the communication device comprising:

    a transmission unit that transmits request information regarding movement including a departure point and a departure time of the communication device and an arrival point and an arrival time of the communication device in the target space to a communication control device that generates a movement plan including a movement route of the communication device;
    a reception unit that receives information regarding the movement plan generated by the communication control device according to the request information; and
    a control unit that controls movement of the communication device in the target space on a basis of the movement plan in which a cumulative interference power received by the communication device from the another communication device is equal to or less than an allowable value.

12. A communication control method for controlling a plurality of movable communication devices, the communication control method comprising:

    acquiring each piece of request information regarding movement of the communication devices; and
    determining a movement route of each of the communication devices on a basis of the request information so that a cumulative interference power received by each of the communication devices from another of the communication devices becomes equal to or less than an allowable value.

13. A communication method comprising:

transmitting request information regarding movement including a departure point and a departure time of a communication device capable of moving in a target space in which another communication device capable of emitting a radio wave exists and an arrival point and an arrival time of the communication device to a communication control device that generates a movement plan including a movement route of the communication device;

receiving information regarding the movement plan generated by the communication control device according to the request information; and

controlling movement in the target space on a basis of the movement plan, wherein a cumulative interference power received by the communication device from the another communication device is equal to or less than an allowable value.

# FIG. 1

OPERATION PLAN/
INTERFERENCE POWER
MANAGEMENT SYSTEM — 200

FREQUENCY MANAGEMENT
SYSTEM A — 100

FREQUENCY MANAGEMENT
SYSTEM B — 100

· · ·

FLYING
COMMUNICATION
DEVICE USER A — 400

FLYING
COMMUNICATION
DEVICE USER B — 400

· · ·

FLYING
COMMUNICATION
DEVICE N — 300

FLYING
COMMUNICATION
DEVICE 1-1 — 300

FLYING
COMMUNICATION
DEVICE 1-2 — 300

· · ·

FLYING
COMMUNICATION
DEVICE 2-1 — 300

FLYING
COMMUNICATION
DEVICE 2-2 — 300

EP 4 679 880 A1

# FIG. 2

FREQUENCY MANAGEMENT SYSTEM

RECORDING UNIT 110

CONTROL UNIT 120

FIRST COMMUNICATION UNIT 131

SECOND COMMUNICATION UNIT 132

THIRD COMMUNICATION UNIT 133

100

*FIG. 3*

OPERATION PLAN/
INTERFERENCE POWER MANAGEMENT SYSTEM

200

RECORDING UNIT 210

CONTROL UNIT 220

COMMUNICATION UNIT 230

# FIG. 4

400 — FLYING COMMUNICATION DEVICE USER

100 — FREQUENCY MANAGEMENT SYSTEM

200 — OPERATION PLAN/ INTERFERENCE POWER MANAGEMENT SYSTEM

OPERATION PLAN APPROVAL REQUEST: S11

EXISTING ADJUSTED OPERATION PLAN TRANSMISSION REQUEST: S12

TRANSMIT EXISTING ADJUSTED OPERATION PLAN: S13

RADIO PARAMETER AND OPERATION PLAN ADJUSTMENT PROCESSING: S14

TRANSMIT ADJUSTED OPERATION PLAN: S15

ADJUSTED OPERATION PLAN APPROVAL PROCESSING: S16

TRANSMIT ADJUSTED OPERATION PLAN APPROVAL PROCESSING RESULT: S17

TRANSMIT OPERATION PLAN APPROVAL RESULT: S18

EP 4 679 880 A1

## FIG. 5

K1: OPERATION ROUTE OF COMMUNICATION DEVICE 1

ARRIVAL POINT OF
COMMUNICATION DEVICE 1
$(x_e, y_e, z_e)$

OPERATION ROUTE INFORMATION
$(x1, y1, z1)$ AT POINT 1

OPERATION ROUTE INFORMATION
$(x0, y0, z0)$ AT POINT 0

DEPARTURE POINT OF
COMMUNICATION DEVICE 1
$(x_s, y_s, z_s)$

EP 4 679 880 A1

EP 4 679 880 A1

# FIG. 6

ARRIVAL POINT OF
COMMUNICATION DEVICE 1
$(x_e, y_e, z_e)$

DEPARTURE POINT OF
COMMUNICATION DEVICE 1
$(x_s, y_s, z_s)$

## FIG. 7

FREQUENCY MANAGEMENT SYSTEM **100**

RECORDING UNIT **110**

CONTROL UNIT **120**

FIRST COMMUNICATION UNIT **131**

SECOND COMMUNICATION UNIT **132**

THIRD COMMUNICATION UNIT **133**

FLYING COMMUNICATION DEVICE USER A **400**

(1) TRANSMIT OPERATION PLAN APPROVAL REQUEST

(2) REFER TO IDENTIFIER INFORMATION OF COMMUNICATION DEVICE USER AND COMMUNICATION DEVICE

EP 4 679 880 A1

# FIG. 8

| FLYING COMMUNICATION DEVICE USER ID | OPERATION PLAN APPROVAL REQUEST IDENTIFICATION ID |
|---|---|
| A | 0 |
| A | 1 |
| ⋮ | ⋮ |

**100**

FREQUENCY MANAGEMENT SYSTEM

RECORDING UNIT **110**

CONTROL UNIT **120**

FIRST COMMUNICATION UNIT **131**

SECOND COMMUNICATION UNIT **132**

THIRD COMMUNICATION UNIT **133**

RECORD COMMUNICATION DEVICE USER ID AND OPERATION PLAN APPROVAL REQUEST IDENTIFICATION ID

FLYING COMMUNICATION DEVICE USER A

**400**

TRANSMIT OPERATION PLAN APPROVAL REQUEST OF No. 0 AND No. 1

# FIG. 9

FREQUENCY MANAGEMENT SYSTEM 100

RECORDING UNIT 110

CONTROL UNIT 120

FIRST COMMUNICATION UNIT 131

SECOND COMMUNICATION UNIT 132

THIRD COMMUNICATION UNIT 133

FLYING COMMUNICATION DEVICE USER A 400

(1) TRANSMIT OPERATION PLAN APPROVAL REQUEST

(3) RECORD OPERATION APPROVAL NECESSARY INFORMATION

(5) DETERMINE RADIO PARAMETER

(6) TRANSMIT ADJUSTED OPERATION PLAN

(4) ACQUIRE EXISTING ADJUSTED OPERATION PLAN

OPERATION PLAN AND INTERFERENCE POWER MANAGEMENT SYSTEM 200

EP 4 679 880 A1

# FIG. 10

FREQUENCY MANAGEMENT SYSTEM 100

RECORDING UNIT 110

CONTROL UNIT 120

FIRST COMMUNICATION UNIT 131

SECOND COMMUNICATION UNIT 132

THIRD COMMUNICATION UNIT 133

FLYING COMMUNICATION DEVICE USER A 400

STATUS CODE OF OPERATION PLAN APPROVAL REQUEST FAILURE TRANSMISSION

EP 4 679 880 A1

# FIG. 11

FREQUENCY MANAGEMENT SYSTEM **100**

RECORDING UNIT **110**

CONTROL UNIT **120**

FIRST COMMUNICATION UNIT **131**

SECOND COMMUNICATION UNIT **132**

THIRD COMMUNICATION UNIT **133**

FLYING COMMUNICATION DEVICE USER A **400**

ROUTE INFORMATION: 12:00:00 1/30/2023

REGULAR FORMAT OF ROUTE INFORMATION: e.g., (x,y,z) [deg]

EP 4 679 880 A1

# FIG. 12

FREQUENCY MANAGEMENT SYSTEM **100**

RECORDING UNIT **110**

CONTROL UNIT **120**

FIRST COMMUNICATION UNIT **131**

SECOND COMMUNICATION UNIT **132**

THIRD COMMUNICATION UNIT **133**

FLYING COMMUNICATION DEVICE USER A **400**

TRANSMIT ADJUSTED OPERATION PLAN

TRANSMIT DESIRE TO USE ADJUSTED OPERATION PLAN

EP 4 679 880 A1

# FIG. 13

FLYING COMMUNICATION DEVICE USER A **400**

(1) TRANSMIT REGISTERED PARAMETER UPDATE APPLICATION

FREQUENCY MANAGEMENT SYSTEM **100**

RECORDING UNIT **110**

CONTROL UNIT **120**

FIRST COMMUNICATION UNIT **131**

SECOND COMMUNICATION UNIT **132**

THIRD COMMUNICATION UNIT **133**

(2) UPDATE AND RECORD PARAMETER

# FIG. 14

FREQUENCY MANAGEMENT SYSTEM — 100

- RECORDING UNIT 110
- CONTROL UNIT 120
- FIRST COMMUNICATION UNIT 131
- SECOND COMMUNICATION UNIT 132
- THIRD COMMUNICATION UNIT 133

400 — FLYING COMMUNICATION DEVICE USER A

(3) OPERATION PLAN APPROVAL REQUEST RETRANSMISSION NOTIFICATION

(4) OPERATION PLAN APPROVAL REQUEST RETRANSMISSION

(5) PERFORM INTERFERENCE RECALCULATION & FREQUENCY ALLOCATION

FIG. 15

# FIG. 16

FREQUENCY MANAGEMENT SYSTEM 100

RECORDING UNIT 110

CONTROL UNIT 120

FIRST COMMUNICATION UNIT 131

SECOND COMMUNICATION UNIT 132

THIRD COMMUNICATION UNIT 133

UPDATE AND
RECORD PARAMETER

# FIG. 17

FIG. 18

## FIG. 19

OPERATION END POINT
TIME $t_{End,2}$

K1: OPERATION ROUTE OF COMMUNICATION
DEVICE 1 (FLYING AHEAD)

OPERATION END POINT
TIME $t_{End,1}$

OPERATION START POINT
TIME $t_{start,1}$

OPERATION START POINT
TIME $t_{start,2}$

K2: OPERATION ROUTE OF COMMUNICATION
DEVICE 2 (FLYING AHEAD)

EP 4 679 880 A1

# FIG. 20

TIME t

TIME t+1

TIME t+2

FIG. 21

## FIG. 22

OPERATION ROUTE CANDIDATE 0

OPERATION ROUTE CANDIDATE 1

OPERATION ROUTE CANDIDATE 2

OPERATION ROUTE CANDIDATE 3

OPERATION ROUTE CANDIDATE 4

# FIG. 23

START

$S21$
CALCULATE (1) CUMULATIVE INTERFERENCE POWERS AT RESPECTIVE OPERATION ROUTE POINTS OF COMMUNICATION DEVICES FLYING AHEAD

$S22$
CALCULATE (2) CUMULATIVE INTERFERENCE POWERS AT RESPECTIVE POINTS $p_m$ OUTSIDE OPERATION ROUTES OF COMMUNICATION DEVICES FLYING AHEAD

$S23$
ARE (1)AND (2) EQUAL TO OR LESS THAN ALLOWABLE VALUES?

Yes

No

$S24$
FREQUENCY CAN BE USED AT $p_m$

$S25$
FREQUENCY CANNOT BE USED AT $p_m$

$S26$
GENERATE FREQUENCY AVAILABILITY MAP

$S27$
EXTRACT OPERATION ROUTE CANDIDATE

END

# FIG. 24

OPERATION END POINT OF
COMMUNICATION DEVICE B

ADJUSTED OPERATION PLAN OF
FREQUENCY MANAGEMENT
SYSTEM A

R1

OPERATION END POINT OF
COMMUNICATION DEVICE A

OPERATION START POINT OF
COMMUNICATION DEVICE A

OPERATION START POINT OF
COMMUNICATION DEVICE B

ADJUSTED OPERATION PLAN OF
FREQUENCY MANAGEMENT
SYSTEM B

EP 4 679 880 A1

## FIG. 25

OPERATION PLAN/
INTERFERENCE POWER
MANAGEMENT SYSTEM

200

100

CUMULATIVE INTERFERENCE POWER
MAP INFORMATION AND OPERATION PLAN

FREQUENCY MANAGEMENT
SYSTEM A

100

CUMULATIVE
INTERFERENCE POWER
MAP INFORMATION AND OPERATION PLAN

FREQUENCY MANAGEMENT
SYSTEM B

. . .

100

CUMULATIVE INTERFERENCE POWER
MAP INFORMATION AND OPERATION PLAN

FREQUENCY MANAGEMENT
SYSTEM N

# FIG. 26

K11: OPERATION ROUTE OF COMMUNICATION DEVICE 1

OPERATION END POINT
TIME $t_{End,1}$

OPERATION START POINT
TIME $t_{start,1}$

FIG. 27

# FIG. 28

EP 4 679 880 A1

# FIG. 29

EP 4 679 880 A1

# FIG. 30

SCHEDULED OPERATION END POINT
OF COMMUNICATION DEVICE 2

R1: LICENSE AREA OF COMMUNICATION DEVICE 1

K11: OPERATION ROUTE OF COMMUNICATION DEVICE 1
(FLYING AHEAD)

OPERATION END POINT
OF COMMUNICATION DEVICE 1

R2

OPERATION START POINT
OF COMMUNICATION DEVICE 1

SCHEDULED OPERATION
START POINT
OF COMMUNICATION DEVICE 2

K12: DESIRED OPERATION ROUTE
OF COMMUNICATION DEVICE 2
(NEWLY DESIRED FLIGHT)

# FIG. 31

START

S71
RECEIVE ADJUSTED OPERATION PLAN FROM
EACH FREQUENCY MANAGEMENT SYSTEM

S72
OPERATION TIMES OF
DIFFERENT COMMUNICATION DEVICES OF
FREQUENCY MANAGEMENT SYSTEM COINCIDE
PARTIALLY OR ENTIRELY?

Yes →

No ↓

S73
NOTIFY EACH FREQUENCY MANAGEMENT
SYSTEM OF OPERATION PERMISSION

S74
TRANSMIT OPERATION PLAN APPROVAL REQUEST
RESPONSE TO COMMUNICATION DEVICE USER

S75
IS APPLIED OPERATION PLAN
APPROVED?   Yes →

No ↓

S76
IS IT OPERABLE BY ADJUSTED
OPERATION PLAN?   Yes →

No →

S77
OPERATE USING APPLIED OPERATION PLAN

S78
OPERATE USING ADJUSTED OPERATION PLAN

S79
NOT OPERABLE
(IT IS ALSO POSSIBLE TO REAPPLY ANOTHER
OPERATION PLAN)

S80
PERFORM INTERFERENCE CALCULATION AGAIN ON
OPERATION TIME OVERLAPPING ROUTE

S81
IS CUMULATIVE
INTERFERENCE POWER AMOUNT OF
EACH COMMUNICATION DEVICE EQUAL TO OR
LESS THAN ALLOWABLE
VALUE?   Yes →

No ↓

S82
NOTIFY EACH FREQUENCY MANAGEMENT
SYSTEM OF INOPERABILITY
(OPERATION CAN BE APPROVED ON CONDITION OF
TRANSMISSION POWER LIMITATION)

S83
NOTIFY EACH FREQUENCY MANAGEMENT
SYSTEM OF OPERATION PERMISSION

S84
TRANSMIT OPERATION PLAN APPROVAL REQUEST
RESPONSE TO COMMUNICATION DEVICE USER

END

# FIG. 32

OPERATION ADJUSTMENT RESULT OF
FREQUENCY MANAGEMENT SYSTEM 1

OPERATION END POINT OF
COMMUNICATION DEVICE 2

L21

K21

OPERATION END POINT OF
COMMUNICATION DEVICE 1

K22    L22    OPERATION TIME OVERLAPPING
ROUTE WITH RESPECT TO
COMMUNICATION DEVICE 3

OPERATION START POINT OF
COMMUNICATION DEVICE 1

OPERATION START POINT OF
COMMUNICATION DEVICE 2

OPERATION ADJUSTMENT RESULT OF
FREQUENCY MANAGEMENT SYSTEM 2

K23

OPERATION END POINT OF
COMMUNICATION DEVICE 3

OPERATION START POINT OF
COMMUNICATION DEVICE 3

OPERATION END POINT OF
COMMUNICATION DEVICE 4

K24

OPERATION START POINT OF
COMMUNICATION DEVICE 4

EP 4 679 880 A1

## FIG. 33

## INTERNATIONAL SEARCH REPORT

| International application No. |
| --- |
| **PCT/JP2024/007018** |

| A. | CLASSIFICATION OF SUBJECT MATTER |
| --- | --- |

***H04W 16/14***(2009.01)i; ***H04W 4/44***(2018.01)i; ***H04W 16/18***(2009.01)i; ***H04W 24/06***(2009.01)i
FI:    H04W16/14; H04W16/18; H04W24/06; H04W4/44

According to International Patent Classification (IPC) or to both national classification and IPC

| B. | FIELDS SEARCHED |
| --- | --- |

Minimum documentation searched (classification system followed by classification symbols)

H04W16/14; H04W4/44; H04W16/18; H04W24/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | JP 2021-157624 A (NTT DOCOMO, INC.) 07 October 2021 (2021-10-07) | 1-3, 8-13 |
| A | paragraphs [0005]-[0062] | 4-7 |
| | paragraphs [0005]-[0062] | |
| Y | WO 2020/189022 A1 (SONY CORPORATION) 24 September 2020 (2020-09-24) | 1-3, 8-13 |
| A | paragraphs [0001]-[0020], [0161]-[0163], fig. 13-14 | 4-7 |
| | paragraphs [0001]-[0020], [0161]-[0163], fig. 13-14 | |
| Y | JP 7231773 B1 (KDDI CORPORATION) 01 March 2023 (2023-03-01) | 1-3, 8-13 |
| A | paragraphs [0054]-[0063] | 4-7 |
| | paragraphs [0054]-[0063] | |
| A | JP 2022-138679 A (HITACHI, LTD.) 26 September 2022 (2022-09-26) | 1-13 |
| | paragraphs [0022]-[0064] | |
| A | WO 2022/019180 A1 (SONY GROUP CORPORATION) 27 January 2022 (2022-01-27) | 1-13 |
| | entire text, all drawings | |

☑ Further documents are listed in the continuation of Box C.      ☑ See patent family annex.

| | |
| --- | --- |
| *     Special categories of cited documents: | "T"  later document published after the international filing date or priority date and not in conflict with the application but cited to understand the principle or theory underlying the invention |
| "A"  document defining the general state of the art which is not considered to be of particular relevance | |
| "D"  document cited by the applicant in the international application | "X"  document of particular relevance; the claimed invention cannot be considered novel or cannot be considered to involve an inventive step when the document is taken alone |
| "E"  earlier application or patent but published on or after the international filing date | |
| "L"  document which may throw doubts on priority claim(s) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"  document member of the same patent family |

| Date of the actual completion of the international search | Date of mailing of the international search report |
| --- | --- |
| **12 April 2024** | **23 April 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

**EP 4 679 880 A1**

## INTERNATIONAL SEARCH REPORT

### C. DOCUMENTS CONSIDERED TO BE RELEVANT

| Category* | Citation of document, with indication, where appropriate, of the relevant passages | Relevant to claim No. |
|---|---|---|
| A | US 2017/0233071 A1 (SKYYFISH, LLC) 17 August 2017 (2017-08-17) entire text, all drawings | 1-13 |

## INTERNATIONAL SEARCH REPORT
**Information on patent family members**

International application No.

**PCT/JP2024/007018**

| Patent document cited in search report | | | Publication date (day/month/year) | Patent family member(s) | Publication date (day/month/year) |
|---|---|---|---|---|---|
| JP | 2021-157624 | A | 07 October 2021 | (Family: none) | |
| WO | 2020/189022 | A1 | 24 September 2020 | US 2022/0158810 A1 paragraphs [0001]-[0102], [0253]-[0255], fig. 13-14 EP 3941102 A1 | |
| JP | 7231773 | B1 | 01 March 2023 | US 2023/0316934 A1 paragraphs [0063]-[0073] | |
| JP | 2022-138679 | A | 26 September 2022 | (Family: none) | |
| WO | 2022/019180 | A1 | 27 January 2022 | US 2023/0262611 A1 entire text, all drawings EP 4187956 A1 CN 115918179 A | |
| US | 2017/0233071 | A1 | 17 August 2017 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019230671 A1

**Non-patent literature cited in the description**

- Petition of AIA for Rulemaking to Adopt Service Rules for Unmanned Aircraft Systems Command and Control in the 5030-5091 MHz Band. *AIA Petition*, 08 February 2018